# EUROPÄISCHE PATENTSCHRIFT

(11) **EP 0 791 731 B1**
(45) Veröffentlichungstag und Bekanntmachung des Hinweises auf die Patenterteilung: **11.07.2001**
(21) Anmeldenummer: 97100921.2
(22) Anmeldetag: 22.01.1997
(51) Int. Cl.: F01N 7/18, F01N 7/08, F16L 51/02, F16L 27/111

(54) **Gelenkiges Verbindungselement für Rohrteile**
Flexible connecting element for tubular parts
Elément de conduite flexible pour éléments tubulaires

(30) Priorität: 23.02.1996 DE 19606738
(43) Veröffentlichungstag der Anmeldung: 27.08.1997
(73) Patentinhaber: Witzenmann GmbH Metallschlauch-Fabrik Pforzheim, 75175 Pforzheim (DE)
(72) Erfinder: Winzen, Wilfried Dr., 75175 Pforzheim (DE)
(74) Vertreter: Lemcke, Rupert, Dipl.-Ing.

(56) Entgegenhaltungen:
- EP-A- 0 226 088
- DE-A- 4 414 738
- FR-A- 2 300 217
- US-A- 3 219 365

## Beschreibung

Die Erfindung betrifft ein gelenkiges Verbindungselement für Rohrteile, insbesondere Rohrteile von Abgasleitungen der Verbrennungsmotore von Kraftfahrzeugen, bestehend aus mindestens einem flexiblen, wenigstens mittelbar mit den Rohrteilen dicht verbundenen Leitungselement sowie wenigstens einem außerhalb des Leitungselementes angeordneten, mit den Rohrteilen zumindest mittelbar verbundenen Stützelement, von dem wenigstens ein Endbereich mit dem diesem benachbarten Rohrteil über mindestens ein Stützpolster mit gedämpft federnden Eigenschaften sowie ein dieses aufnehmendes Lagerteil in angular zueinander beweglich geführter, gegenseitig tragender Verbindung steht, wobei das Stützpolster beidseits in Axial-, Radial- und gegebenenfalls Umfangsrichtung gegen das Stützelement und/oder das Lagerteil in Anlage ist, wie z.B. in dem Dokument DE 44 14 738 A gezeigt wird.

Derartige gelenkige Verbindungselemente werden zwischen zwei in der Regel im wesentlichen miteinander fluchtende Rohrteile von Rohrleitungen eingesetzt, um Angularbewegungen und auch Axialbewegungen zwischen den Rohrteilen in wenn auch oft nur geringem Maße zuzulassen sowie eine gegenseitige Abkopplung bezüglich der Übertragung von Schwingungen und Geräuschen zwischen den Rohrteilen zu erreichen. Ein hier besonders in Frage kommendes Anwendungsgebiet sind die Abgasleitungen von Verbrennungsmotoren bei Kraftfahrzeugen, auf die nachfolgend im wesentlichen bezug genommen wird, ohne damit den Anwendungsbereich des Gegenstandes der Erfindung zu beschränken. Üblicherweise sind die miteinander zu verbindenden Rohrteile Glattrohre bzw. deren Enden. Genausogut können aber hier auch Anschlußflansche in Frage kommen. Der Querschnitt der Rohrteile ist in der Regel kreisförmig und koaxial zum entsprechend ebenfalls kreisförmigen Leitungselement. Es sind jedoch auch andere Querschnitte denkbar, beispielsweise ein ovaler Querschnitt der Rohrteile mit entsprechend angepaßtem Querschnitt des Leitungselementes.

Was das flexible Leitungselement betrifft, so kann dieses die Form eines ein- oder mehrlagigen Wellrohres, Balges, dichtgewickelten Schlauches oder dergleichen haben, wobei sich die Materialwahl nach den gegebenen Anforderungen richtet. Bei Abgasleitungen von Kraftfahrzeugen findet hier wie auch für die übrigen Bauteile des Verbindungselementes Metall Verwendung.

Was die Zahl der durch das Stützpolster gebildeten Gelenkstellen des gattungsmäßigen Verbindungselementes betrifft, so ist vielfach eine Gelenkstelle ausreichend. Es können jedoch auch zwei Gelenkstellen, eine an jedem Ende des Stützelementes in untereinander gleicher Weise ausgebildet sein, um den resultierenden Gelenkpunkt möglichst in die Längsmitte der Achse des Leitungselementes zu legen und dieses damit geringstmöglich zu belasten und um im übrigen den miteinander verbundenen Rohrteilen eine hohe gegenseitige Beweglichkeit zu lassen. Um eine weitere Vergrößerung insbesondere der Angularbeweglichkeit zweier aufeinander zu gerichteter Rohrteile zu erreichen, können auch mehrere Verbindungselemente der vorgenannten Art hintereinander angeordnet werden.

Sind bei durch das Verbindungselement aneinander gekoppelten Rohrteilen gegenseitige Torsionsbewegungen zu erwarten, die von einem Leitungselement der hier in Frage kommenden Art nur schlecht abgestützt werden können, so besteht bei einem Verbindungselement der eingangs genannten Gattung die Möglichkeit, das jeweilige Ende des Stützelementes im Bereich der durch das Stützpolster gebildeten Gelenkstelle mechanisch gegenüber dem benachbarten Rohrteil bzw. Lagerteil in Umfangsrichtung beispielsweise durch eine formschlüssige Verbindung abzustützen, die die Gelenkarbeit des Verbindungselementes nicht beeinträchtigt.

Hinsichtlich der Ausbildung des Stützpolsters kann dieses ein aus einem Geflecht, Gewirke, Gestricke oder dergleichen gepreßtes Teil sein, wobei als Material in der Regel Metalldraht Verwendung findet, je nach Temperatur- bzw. sonstiger Belastung jedoch auch andere Materialien in Frage kommen. Zur Beeinflussung der Charakteristik eines solchen Stützpolsters können in dieses außerdem härtere oder besonders federnde Teile eingelagert sein. Auch kann unter Anpassung der Form der angrenzenden Bauteile der Querschnitt dieses Stützpolsters unterschiedlich, beispielsweise rechteckig, rund, oval oder polygonal sein und sich auch über die Längserstreckung des Stützpolsters ändern je nachdem, welche konstruktiven und funktionellen Voraussetzungen im Hinblick auf das Stützpolster bestehen. Dabei können selbstverständlich für jede Gelenkstelle auch beispielsweise zwei Stützpolster in Axialrichtung nebeneinander vorgesehen werden, für die dann nur dafür Sorge zu tragen ist, daß sie durch entsprechende Formgebung der angrenzenden Bauteile ihre zumindest axiale und radiale Halterung bzw. Abstützung finden.

Bei all diesen an sich bekannten Bauformen ist ein Stützpolster der beschriebenen Art ein verhältnismäßig steifes Bauteil, dessen Material sich bei der Gelenkarbeit setzen kann, wodurch sich eine Lose oder doch zumindest eine Veränderung der Federungskennlinie des Stützpolsters ergeben kann. Letzteres kann durch Verschleiß der innerhalb des Gelenkes gegeneinander beweglichen Teile noch zusätzlich beeinflußt werden. Um dem entgegenzuwirken, kann vorgesehen sein, das Stützpolster beim Zusammenbau der jeweiligen Gelenkstelle durch die das Stützpolster tragenden Teile axial vorzuspannen. Gleichermaßen kann jedoch auch das Stützpolster durch wenigstens ein an ihm angreifendes, vorgespanntes Federelement druckbeaufschlagt sein, das zwischen das Stützpolster und das dort benachbarte Bauteil eingesetzt ist.

Bei allen vorbeschriebenen Bauformen bereitet jedoch die Herstellung und Anbringung des Stützelementes einigen Aufwand, der sich aus der verhältnismäßig komplizierten Formgebung des Stützelementes ergibt, so daß für den Einbau auf besonders komplizierte Montageverfahren nicht verzichtet werden kann und insbesondere in der Regel zusätzliche Schweißarbeiten erforderlich sind, um das Stützelement zusammenzusetzen.

Aufgabe der Erfindung ist es daher, ein Verbindungselement der eingangs genannten Art derart auszubilden, daß für das Stützelement eine einfache Montage ohne das Erfordernis irgendwelcher Schweißarbeiten möglich wird.

Diese Aufgabe ist erfindungsgemäß dadurch gelöst, daß das Stützelement durch wenigstens zwei das Leitungselement im wesentlichen achsparallel übergreifende, mit ihren Enden radial zur Achse des Verbindungselementes gegen das Stützpolster bzw. das zugeordnete Rohrteil widergelagerte Stützteile gebildet ist, und daß die Stützteile durch wenigstens ein sie außen umschlingendes Spannmittel in Radialrichtung aufeinander zu gerichtet zusammengehalten sind.

Diese erfindungsgemäßen Maßnahmen bedeuten im wesentlichen, daß das Stützelement nunmehr aus mehreren in demselben Längenabschnitt des Leitungselementes von außen aufsetzbaren, gleichartigen Teilen besteht, die zu ihrer Anbringung und Halterung keinerlei Schweißarbeiten mehr bedürfen, einfach herzustellen und zu montieren sind und im übrigen gegenüber den bekannten Bauformen eine Materialersparnis erbringen können, indem die Stützteile nicht mehr unbedingt das Leitungselement vollständig umfassen müssen. Damit verbleibt als Schweißarbeit nur noch das beidendige, dichte Anschließen des Verbindungselementes an die Rohrteile, was jedoch ohnehin unumgänglich ist, da es erst beim Kunden bzw. Verarbeiter vorgenommen wird.

Durch die Erfindung ist es nunmehr außerdem möglich, das Verbindungselement hinsichtlich seiner Gestaltung in weiten Grenzen zu variieren, ohne daß sich dadurch die Fertigung und Montage erschweren würden, womit die erweiterte Möglichkeit besteht, auf spezielle Kundenwünsche schnell einzugehen. Schließlich ist nunmehr das Verbindungselement in besonderer Weise auch für eine automatische Montage aus seinen Einzelteilen geeignet, da es nur noch um Arbeiten des Zusammensetzens geht.

Aus Gründen des symmetrischen Aufbaus werden die Stützteile vorzugsweise gleichmäßig über den Umfang des Verbindungselementes verteilt angeordnet. Dabei können die Stützteile vorteilhafterweise als um die Achse des Verbindungselementes gewölbte, schalenförmige Bauteile ausgebildet sein.

Im Rahmen der Erfindung liegt es ferner, daß das Stützpolster und damit die Stützteile wenigstens auf oder in der Nähe der Hauptbewegungsachse des Verbindungselementes angeordnet sind.

Bei einer Bauform nach der Erfindung kann vorgesehen sein, daß bei einem Stützelement mit zwei mit einem ihrer Endbereiche mit dem Stützpolster in Eingriff befindlichen Stützteilen deren andere Enden einstückig mit einem dort auf das zugeordnete Rohrteil aufsetzbaren und an diesem gegebenenfalls zusammen mit dem zugehörenden Ende des Leitungselementes festlegbaren Rohrstück verbunden sind. Dazu kann vorgesehen sein, daß das Stützelement aus einem streifenförmigen Blechzuschnitt hergestellt ist durch mittiges Tiefziehen und Lochen des Rohrstückes und anschließendes Formen und Abbiegen der Stützteile aus den sich an das Rohrstück beidseits anschließenden Teilen des Blechzuschnittes in eine zur Achse des Rohrstückes im wesentlichen parallele Position. Mit einer solchen Bauform ergibt sich eine besonders rationelle Fertigung des Stützelementes und auch eine erleichterte Montage, weil die beiden Stützteile dazu bereits unverlierbar und in der richtigen gegenseitigen Position miteinander verbunden sind, wobei durch die Ausformung des Rohrstückes gleich auch das richtige Anschlußteil für die spätere Verbindung mit dem zugeordneten Rohrteil geschaffen ist.

Diese Bauform führt zu einem Verbindungselement mit einer Gelenkstelle, wobei selbstverständlich die nach dem vorstehenden Vorschlag mit einem Rohrstück verbundenen Enden der Stützteile auch in anderer Weise zur Wiederlagerung auf dem zugeordneten Rohrteil ausgearbeitet sein können insbesondere dann, wenn für das Verbindungselement mehr als zwei Stützteile gleichmäßig über den Umfang verteilt verwendet werden sollen.

Für Verbindungselemente der an sich bekannten Art mit je einer Gelenkstelle im Bereich beider Enden des Leitungselementes kommt ebenfalls die Verwendung von zwei oder mehr Stützteilen in Frage, wobei in der Regel aber zwei einander gegenüberliegende Stützteile ausreichend sein werden. Ebenso wie für die vorstehend beschriebene Bauform kann besonders in diesem Falle, bei dem also die Stützteile mit beiden Endbereichen mit wenigstens einem Stützpolster in Eingriff sind, vorgesehen sein, daß die Stützteile im Längenbereich zwischen den Endbereichen als in Umfangsrichtung des Verbindungselementes gegeneinander stoßende Bauteile ausgebildet sind, damit ihre Positionierung über den Umfang des Verbindungselementes sichergestellt ist. Hier ist es dann zweckmäßig, daß die gegenseitigen Stoßkanten der Stützteile zur Achse des Verbindungselementes parallel verlaufend ausgebildet sind und die Stützteile im Bereich der Stoßkanten formschlüssig gegen radialen Versatz miteinander verbunden sind, wobei diese formschlüssige Verbindung durch an den Stützteilen angeformte, sich in Umfangsrichtung erstreckende und jeweils das benachbarte Stützteil hintergreifende Laschen gebildet sein kann.

Für alle bisher beschriebenen Bauformen des Verbindungselementes mit einer oder auch mit zwei Gelenkstellen ist es ferner zweckmäßig, daß das Lagerteil als ringförmig um die Achse des Verbindungselementes umlaufendes und mit dem zugeordneten Ende des Leitungselementes dicht verbundenes Bauteil ausgebildet ist, wobei vorgesehen sein kann, daß das Lagerteil auf einen zylindrischen Endbereich des Leitungselementes aufgesetzt ist. Auf diese Weise bildet das Lagerteil das Bauteil des Verbindungselementes, das gegebenenfalls zusammen mit dem Ende des Leitungselementes im späteren Anschluß an das benachbarte Rohrteil dient.

Hinsichtlich der Anordnung des Stützpolsters ist bereits eingangs gesagt, daß dieses in Axial- und Radialrichtung und gegebenenfalls auch in Umfangsrichtung in Anlage gegen das Stützelement und/oder das Lagerteil ist. Hierzu sind im Bereich des Stützpolsters die genannten Teile durch geeignete Formgebung entsprechend ausgebildet, um dem Stützpolster die erforderlichen Anlageflächen zu bieten, was dazu führt, daß das Stützpolster durch die benachbarten Bauteile praktisch gekapselt ist und damit die formschlüssige Verbindung zwischen Stützteil und Lagerteil über das Stützpolster gegeben ist.

In diesem Rahmen kann das Stützpolster als um die Achse des Verbindungselementes umlaufender Stützring ausgebildet sein, der durch das Lagerteil in Axialrichtung und nach radial innen gefaßt ist, während seine äußere Fassung im gemeinsamen Umfangsbereich durch die zugeordneten Enden der Stützteile in Axialrichtung und nach radial außen erfolgt. Dabei bleiben dann aber Stützpolsterteile unbenutzt, wodurch sich andererseits allerdings eine Wiederlagerung des Stützpolsters in Umfangsrichtung erübrigt.

Nach einer anderen Bauform kann daher vorgesehen sein, daß das Stützpolster als um eine zur Achse des Verbindungselementes senkrechte Achse umlaufender Stützring ausgebildet ist, womit sich die Möglichkeit ergibt, diese Stützpolster hinsichtlich seiner Außenabmessungen im Endbereich des zugeordneten Stützteils unterzubringen. Um hier auch die notwendige Abstützung in Umfangsrichtung des Verbindungselementes zu schaffen, kann vorgesehen sein, daß die zentrale Öffnung des Stützringes formschlüssig auf einer zur Achse des Verbindungselementes radial gerichteten Ausbeulung des zugeordneten Endbereiches des Stützteiles und/oder des Lagerteiles sitzt, und daß der Stützring radial außen durch Abbiegungen und/oder Ausbeulungen des Stützteiles und/oder des Lagerteiles in Axialrichtung des Verbindungselementes abgestützt ist.

Wählt man diese vorstehend beschriebene Bauform, so können zur Ausbildung des Stützpolsters auch andere Möglichkeiten eingesetzt werden als die eingangs erwähnten Preßteile aus einem Geflecht, Gewirke oder Gestricke. Als besonders zweckmäßig hat es sich hier erwiesen, daß der das Stützpolster bildende Stützring als Schraubenfeder ausgebildet ist, die auf die radial gerichtete Ausbeulung des zugeordneten Endbereiches des Stützteiles und/oder des Lagerteiles gesetzt ist. Derartige Schraubenfedern sind in jeder gewünschten Größe auf dem Markt erhältlich, so daß es zur Schaffung des jeweiligen Stützpolsters keiner besonderen Fertigung bedarf.

Eine weitere Möglichkeit besteht darin, daß das Stützpolster als zur Achse des Verbindungselementes zentrisches Ringsegment ausgebildet ist, das dann natürlich wieder axial und radial durch entsprechende Formgebung des Stützteiles und des Lagerteiles gefaßt ist. Was die auch in diesem Falle notwendige Abstützung in Umfangsrichtung betrifft, so kann vorgesehen werden, daß das Ringsegment durch mit seinen in Umfangsrichtung weisenden Enden in formschlüssigem Eingriff befindliche Abbiegungen und/oder Ausbeulungen des Stützteiles und/oder des Lagerteiles in Umfangsrichtung festgelegt ist.

Sind in diesem Falle entsprechend einer bereits erwähnten Möglichkeit zwei Ringsegmente axial zur Bildung des Stützpolsters nebeneinander angeordnet, so kann deren gegenseitige Positionierung dadurch gewährleistet sein, daß zwischen diesen Ringsegmenten eine konzentrische, radial gerichtete Ausbeulung des zugeordneten Endbereiches des Stützteiles und/oder des Lagerteiles in formschlüssigem Eingriff ist.

Nach dem Kern der Erfindung ist es nun außerdem als notwendig vorgesehen, daß die Stützteile durch wenigstens ein sie außen umschlingendes Spannmittel in Radialrichtung aufeinander zu gerichtet zusammengehalten sind. Hierzu kann für das Spannmittel grundsätzlich ein Ring mit rechteckigem, rundem, ovalem oder polygonalem Materialquerschnitt vorgesehen werden je nachdem, welche Gestaltung sich gerade als zweckmäßig erweist. Was die Anordnung des Ringes oder der Ringe betrifft, so müssen diese in Axialrichtung des Verbindungselementes gesehen natürlich dort sitzen, wo sie zum Zusammenhalten der Stützteile erforderlich sind, wobei grundsätzlich die Möglichkeit besteht und durch die vorstehend beschriebenen Gestaltungen auch gegeben ist, mit nur einem Ring auszukommen, wie dies anhand der späteren Beschreibung von Ausführungsformen noch deutlich werden wird.

Zur Ausgestaltung des Ringes kann nun vorgesehen werden, daß dieser wenigstens eine durch Verschlußmittel zusammenfügbare Teilungsstelle aufweist, wobei die Verschlußmittel durch wenigstens ein an den beiden die Teilungsstelle bildenden Ringenden angreifendes Verbindungselement gebildet sein können, welches beispielsweise eine Spannschraube sein kann aber auch beispielsweise eine Klammer oder dergleichen. Auf diese Weise hat der Ring die Gestalt einer Spannschelle, die in der an sich bekannten Weise in offenem Zustand aufgesetzt und dann durch Betätigung der Verschlußmittel zugezogen wird. Hierbei ergibt sich dann auch die Möglichkeit eines Nachspannens nach längerer Betriebszeit.

Beim Gegenstand der vorliegenden Erfindung besteht jedoch eine andere, besonders günstige Möglichkeit darin, daß der Ring geschlossen umlaufen und in seinem lichten Querschnitt derart bemessen ist, daß er auf den Stützteilen unter vorherbestimmter radialer und gegebenenfalls axialer Vorspannung der Stützpolster sitzt. Hierbei kann vorgesehen sein, daß der Ring auf die Stützteile bei radialer Überpressung der Stützpolster durch die Stützteile aufgesetzt ist. Damit ist der Ring also durch ein einfaches, keinerlei zusätzliche Manipulation erforderndes Bauteil gebildet, das damit nicht nur kostengünstig sondern auch besonders betriebssicher ist. Für die Montage bzw. das Aufsetzen des Ringes ist es nur erforderlich, die Stützteile in Radialrichtung gegen die Stützpolster etwas stärker zusammenzupressen. Sitzt dann der Ring an Ort und Stelle und werden die Stützteile wieder losgelassen, so bildet sich der kraftschlüssige Verbund zwischen Stützteilen und Ring durch Rückfederung der Stützpolster von selbst. Gerade diese Ausbildung ist also besonders für eine automatische Montage geeignet.

Um zusätzlich sicherzustellen, daß sich der Ring auch während des Betriebs nicht lösen oder verschieben kann, kann in allen Fällen, also nicht nur für einen Ring in Form einer Spannschelle vorgesehen sein, daß der Ring in eine zur Achse des Verbindungselementes konzentrische, radiale Vertiefung der Stützteile eingreifend gegen axiale Verschiebung gesichert ist.

Bei allen bisher beschriebenen Bauformen sind die Stützteile einstückige, sich parallel zur Achse des Verbindungselementes erstreckende Gebilde, die aber noch eine gewisse Schallübertragung bedingen können. Um hier bezüglich der Schallübertragung eine zusätzliche Verbesserung vorzunehmen, kann erfindungsgemäß vorgesehen sein, daß die Stützteile im wesentlichen im Bereich der Mitte ihrer zur Achse des Verbindungselementes parallelen Längserstreckung unter Bildung zweier Stützteilabschnitte geteilt ausgebildet sind, und daß die Stützteilabschnitte durch ein Zwischenelement aus einem elastischen, temperaturbeständigen Material miteinander verbunden sind. Dabei kann dieses Material beispielsweise ein Elastomer sein. Ferner kann zur guten Anbringung des Zwischenelementes vorgesehen sein, daß die Stützteilabschnitte sich in Axialrichtung teilweise überdecken, und daß das Zwischenelement als die Stützteilabschnitte im Überdeckungsbereich miteinander verbindendes Kissen ausgebildet ist. Ein solches Kissen, beispielsweise aus einem Elastomer, kann mit den Stützteilabschnitten durch Kleben, Vulkanisation oder dergleichen Fügeverfahren verbunden sein.

In die gleiche Richtung zielt eine weitere Gestaltungsmöglichkeit nach der Erfindung, die vorsieht, daß zwischen den Stützteilen und dem flexiblen Mittelbereich des Leitungselementes, das ist zum Beispiel der gewellte Abschnitt eines Leitungselementes in Form eines Wellrohres, ein in Axial-, Radial- und Umfangsrichtung festgelegtes Dämpfungskissen angeordnet sein, das beispielsweise ein aus einem Geflecht, Gewirke oder Gestricke aus Metalldraht gepreßtes Teil sein kann. Mit einem solchen Dämpfungskissen lassen sich zusätzlich Schwingungen insbesondere des flexiblen Leitungselementes zumindest herabsetzen, wodurch sich ebenfalls eine Verminderung der Schall- und Schwingungsübertragungsfähigkeit des erfindungsgemäßen Verbindungselementes ergibt.

Bisher wurde im wesentlichen ein Verbindungselement für die aufeinander zu gerichteten Rohrteile einer einflutigen Leitung betrachtet. Gerade im Kraftfahrzeugbau finden aber auch in der Abgasanlage vielfach mehrflutige Leitungen Verwendung, die praktisch aus einer Nebeneinanderanordnung von Einrichtungen der bisher beschriebenen Art bestehen. Für solche mehrflutigen Leitungen ist die Verwendung der erfindungsgemäßen Maßnahmen in entsprechender Anpassung ebenfalls geeignet und führt insbesondere zu einer einfachen und platzsparenden Bauform. Hier kann dann die Gestaltung so ausgeführt werden, daß bei mehrflutigen Leitungen benachbarte Rohrteile durch Distanzstücke gegeneinander abgestützt sind, die Stützteile auf im wesentlichen einander gegenüberliegenden Außenseiten der Leitungsanordnung vorgesehen sind und die Spannmittel die Leitungsanordnung und die Stützteile außen umfassend und die Rohrteile gegen die Distanzstücke drückend vorgesehen sind. Hat man in diesem Sinne also zum Beispiel eine zweiflutige Leitungsanordnung, so können einander gegenüberliegend je ein Stützteil, also insgesamt nur zwei Stützteile für beide Leitungen gemeinsam Verwendung finden, wobei dann ein Stützteil gegen die Rohrteile der einen Leitung und das andere Stützteil gegen die Rohrteile der anderen Leitung geht.

Weitere Merkmale der Erfindung und deren Einzelheiten ergeben sich aus der nachfolgenden Beschreibung von Ausführungsformen, die auf der Zeichnung dargestellt sind. In der Zeichnung zeigen:
- Figur 1: ein Verbindungselement im axialen Halbschnitt;
- Figur 2: eine teilweise Draufsicht auf das Verbindungselement gemäß Figur 1;
- Figur 3: eine Stirnansicht des Verbindungselementes gemäß Figur 1 und 2, teilweise geschnitten;
- Figur 4: eine Variante des Gegenstandes gemäß Figur 3;
- Figur 5: die Schnittansicht V-V aus Figur 4;
- Figur 6: die ersten Stufen der Herstellung eines Stützelementes;
- Figur 7: die letzte Fertigungsstufe des Stützelementes gemäß Figur 6;
- Figur 8 und 9: die Montage eines Verbindungselementes mit einem Stützelement gemäß Figur 7;
- Figur 10: eine weitere Ausführungsform eines Verbindungselementes im axialen Halbschnitt;
- Figur 11: die teilweise Draufsicht auf das Verbindungselement gemäß Figur 10;
- Figur 12: eine weitere Ausbildung eines Verbindungselementes im axialen Halbschnitt;
- Figur 13: die teilweise Draufsicht auf das Verbindungselement gemäß Figur 12;
- Figur 14: eine Stirnansicht des Verbindungselementes gemäß Figur 12 und 13, teilweise geschnitten;
- Figur 15: die Einzelheit XV aus Figur 14;
- Figur 16: eine weitere Ausführungsform eines Verbindungselementes im axialen Halbschnitt;
- Figur 17: die teilweise Draufsicht auf den Gegenstand gemäß Figur 16;
- Figur 18: eine Stirnansicht des Verbindungselementes gemäß Figur 16 und 17, teilweise geschnitten;
- Figur 19, 20, 24, 25, 27: weitere Ausführungsformen eines Verbindungselementes im axialen Halbschnitt;
- Figur 21 bis 23: eine Einzelheit im Axialschnitt, in Stirnansicht und in Draufsicht;
- Figur 26: eine Stirnansicht zu Figur 25;
- Figur 28: eine Stirnansicht zu Figur 27;
- Figur 29 und 31: die Bauform nach Figur 10 bzw. ähnlich Figur 27 mit anderen Stützpolstern
- Figur 30: einen Teilschnitt XXX-XXX aus Figur 29
- Figur 32 und 33: Abwandlungen der Bauformen nach Figur 25 bzw. Figur 10;
- Figur 34: eine zweiflutige Leitungsanordnung, teilweise im axialen Halbschnitt, und
- Figur 35 und 36: die Schnittansicht XXXV-XXXV aus Figur 34 mit zwei unterschiedlichen Gestaltungen.

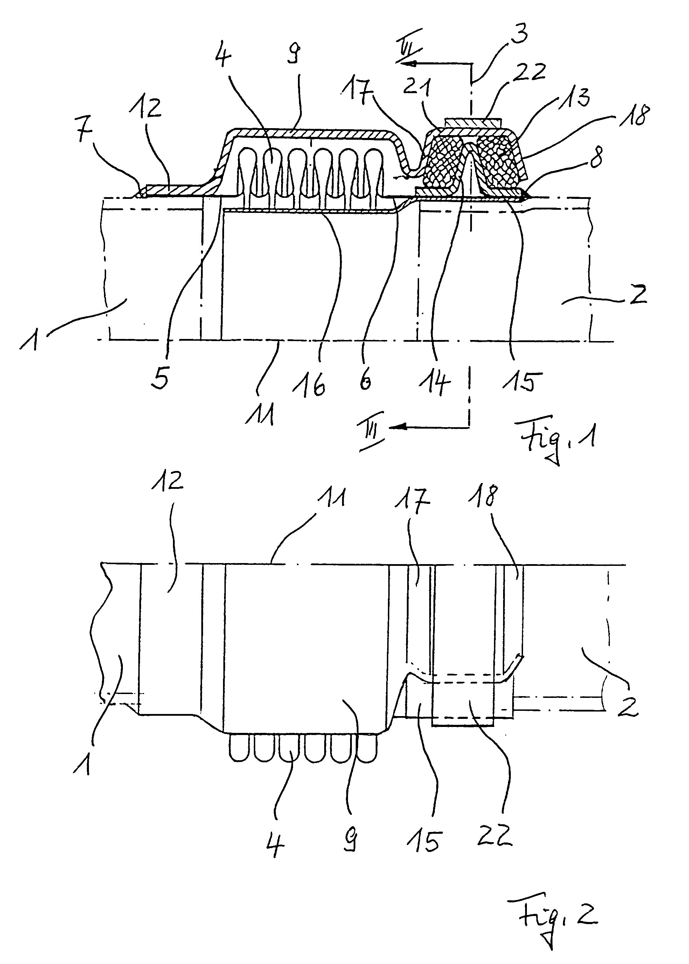

Die Figuren 1 bis 3 zeigen ein Verbindungselement für zwei axial fluchtend aufeinander zu gerichtete Rohrteile 1, 2 der Abgasanlage eines Kraftfahrzeuges im axialen Halbschnitt, bezüglich Figur 2 in halber Draufsicht auf den Gegenstand gemäß Figur 1 und mit Figur 3 in Schnittansicht gemäß der die Achse 3 enthaltenden Schnittebene III-III in Figur 1.

Das Verbindungselement weist einen ringgewellten Metallbalg 4 mit zylindrischen Anschlußenden 5, 6 auf, die auf die Rohrteile 1, 2 aufgesteckt und bei 7 bzw. 8 mit den Rohrteilen verschweißt sind. Überbrückt wird das Leitungselement 4 durch zwei Stützteile 9, 10 (siehe Figur 7), die sich bezüglich der Achse 11 des Verbindungselementes diametral einander gegenüberliegen. Die Stützteile 9, 10 sind an einem Ende einstückig mit einem Rohrstück 12 verbunden, das auf dem zylindrischen Anschlußende 5 des Leitungselementes 4 sitzt und mit diesem zusammen über die Schweißung 7 mit dem Rohrteil 1 verbunden ist.

Das andere Ende der Stützteile 9, 10 übergreift jeweils ein um die Achse 3 umlaufend angeordnetes Stützpolster 13, das einstückig geschlossen oder auch aus mehreren Segmenten zusammengesetzt sein kann. Das Stützpolster 13 sitzt mit seiner zentralen Öffnung auf einer zur Achse 11 radial gerichteten Ausbeulung 14 eines Lagerteiles 15, das ringförmig um die Achse 11 des Verbindungselementes umlaufend auf das zylindrische Anschlußende 6 des Leitungselementes 4 aufgesetzt und mit diesem zusammen bei 8 mit dem Rohrteil 2 verschweißt ist. Dabei ist zwischen Anschlußende 6 und Rohrteil 2 noch das Ende eines Abgasführungsrohres 16 eingesetzt und ebenfalls mitverschweißt, wobei sich das Abgasführungsrohr 16 auf der anderen Seite mit seinem freien Ende über den gewellten Bereich des Leitungselementes 4 bis in die Nähe des Rohrteiles 1 erstreckt.

Durch die Ausbeulung 14 ist ersichtlich das Stützpolster 13 in Axial- und in Umfangsrichtung bezogen auf die Achse 11 abgestützt, wobei seine radial innere Abstützung durch das Lagerteil 15 gegeben ist. Demgegenüber ist das Stützpolster 13 außen in Axialrichtung durch aus den Enden der Stützteile 9, 10 gebogene, im wesentlichen radial gerichtete Flanken 17, 18 der zugeordneten Enden der Stützteile 9, 10 abgestützt, während seine Abstützung in Umfangsrichtung durch entsprechend abgebogene Flanken 19, 20 der Enden der Stützteile 9, 10 gebildet ist. In Radialrichtung nach außen findet die Widerlagerung des Stützpolsters 13 gegen einen sich achsparallel erstreckenden Teil 21 des Stützteiles 9 bzw. 10 statt. Diese im wesentlichen im Zusammenhang mit dem Stützteil 9 beschriebenen Einzelheiten gelten für das gegenüberliegende Stützteil 10 entsprechend.

Um die mit dem jeweiligen Stützpolster 13 in Verbindung stehenden freien Enden der Stützteile 9, 10 gegen das jeweilige Stützpolster in mehr oder weniger vorgespannter Anlage und damit die Stützteile 9, 10 zusammenzuhalten, ist auf deren achsparallelen Teil 21 ein geschlossen umlaufender Ring 22 aus Metall und mit flach-rechteckigem Querschnitt aufgeschoben, was dadurch geschehen kann, daß die freien Enden der Stützteile 9, 10 gegen das jeweilige Stützpolster 13 etwas stärker angedrückt werden, so daß sich der Ring 22 aufschieben läßt. Werden dann die Stützteile 9, 10 wieder losgelassen, so wird der Ring 22 grundsätzlich durch die Vorspannung des jeweiligen Stützpolsters 13 und die damit nach radial außen auf die freien Enden der Stützteile 9, 10 ausgeübte Kraft festgehalten. Um hier noch ein Zusätzliches zu tun, kann der jeweilige achsparallele Teil 21 noch eine zum Ring 22 passende radiale und um die Achse 11 umlaufende Vertiefung aufweisen, die eine Axialverschiebung des Ringes 22 verhindert. Dies ist in der Zeichnung nicht dargestellt.

In den Umfangsbereichen zwischen den achsparallelen Teilen 21 der Stützteile 9, 10 verläuft der Ring 22 frei bzw. liegt unter Entfaltung einer Reibungsdämpfung an den zylindrischen Bereichen des Lagerteiles 15 an, wie dies aus Figur 3 ersichtlich ist. Figur 3 läßt im übrigen auch erkennen, daß die Stützteile 9, 10 als um die Achse 11 gewölbte Bauteile ausgebildet sind.

Die Figuren 4 und 5 zeigen eine Abwandlung der bisher beschriebenen Bauform und eine Einzelheit daraus, bezogen auf Figur 4 in der Darstellung gemäß Figur 3. Daraus ist ersichtlich, daß die Abbiegungen 19, 20 endständig noch mit einem nach radial außen gerichteten Fortsatz 23 bzw. 24 versehen sein können, über dessen Abschlußkante der Ring 22 verläuft. Hier kann die Abschlußkante eine zum Ring 22 passende Aussparung 25 aufweisen, die ein Verrutschen des Ringes 22 in Richtung der Achse 11 unterbindet.

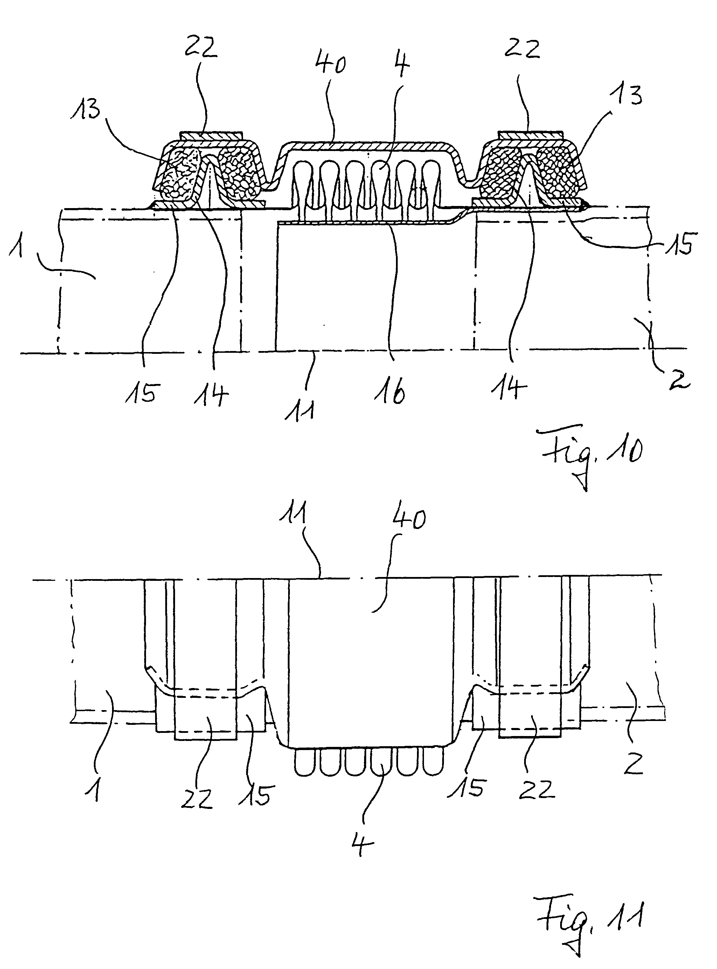

Das Stützpolster 13 ist vorstehend als um die Achse 3 umlaufend geschildert. Anhand der Darstellung gemäß Figur 1 ist es jedoch auch denkbar, daß das Stützpolster durch zwei nebeneinander liegende und um die Achse 11 umlaufende Ringe gebildet ist. In diesem Falle können dann die Abbiegungen 19 bzw. 20 gemäß Figur 3 und 4 entfallen und es wäre die Ausbeulung 14 als um die Achse 11 umlaufende Sicke zu gestalten. Hier würden dann die das Stützpolster bildenden Ringe im Umfangsbereich zwischen den Stützteilen 9 und 10 frei liegen und außen von dem Ring 22 abgedeckt sein. Diese in ihrer Beschreibung nicht noch einmal wiederholte Variante kann gleichermaßen auch für die Bauformen nach den Figuren 10 bis 20, 24 bis 28 und 32 bis 36 gelten.

Anhand der Figuren 6 bis 9 sei nun eine einfache Herstellung und Montage des aus den Stützteilen 9, 10 und Rohrstück 12 gebildeten Stützelementes geschildert. Hierzu wird ein passender Blechzuschnitt 26 durch Tiefziehen mittig mit einem Napf 27 versehen, dessen Boden 28 dann ausgestanzt wird, so daß das Rohrstück 12 gemäß Figur 1 und 2 entsteht. Anschließend werden durch entsprechende Formung die sich an das Rohrstück 12 anschließenden Blechteile 29, 30, wie aus der unteren Darstellung der Figur 6 ersichtlich, in eine zur Achse des Rohrstückes 12 im wesentlichen parallele Position gebracht und mit einer um diese Achse verlaufenden Wölbung versehen.

Durch weitere Formgebung der Teile 29, 30 entstehen dann, wie aus Figur 7 ersichtlich, die Stützteile 9, 10 in einer aber noch zur Achse des Rohrstückes 12 mit ihren freien Enden etwas aufgespreizten Stellung.

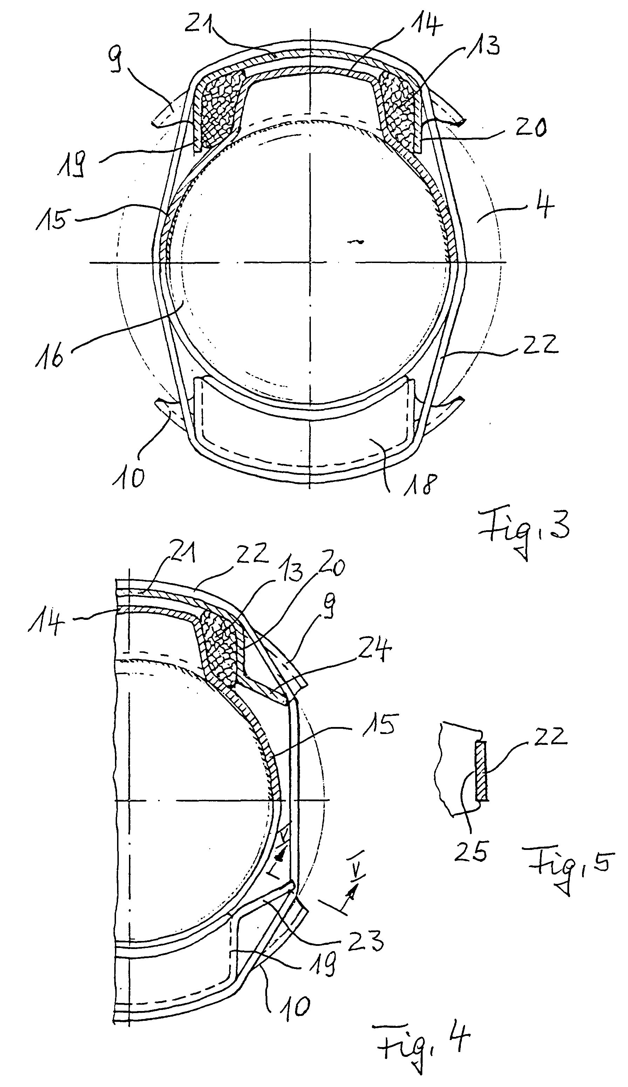

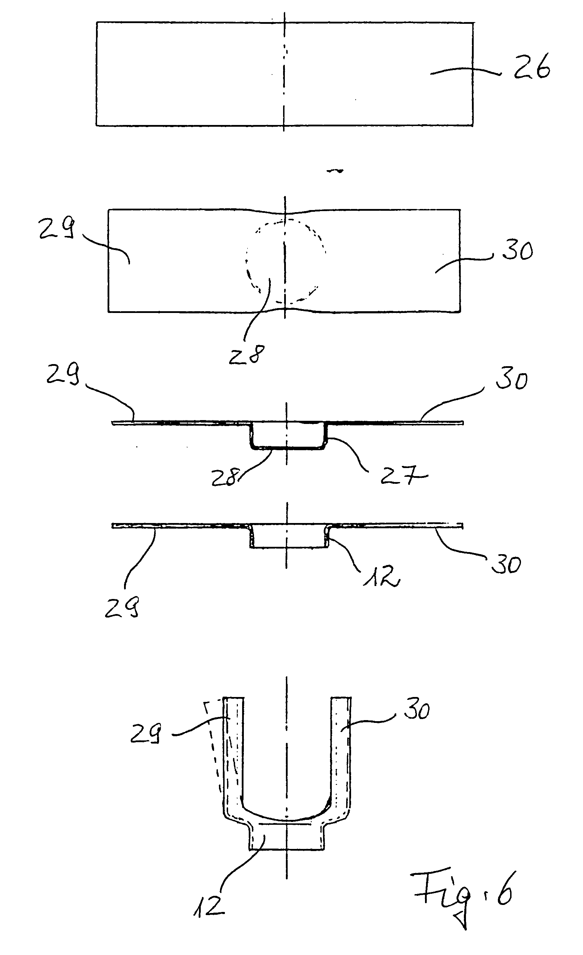

In dieses so vorbereitete Stützelement kann dann, wie aus Figur 8 ersichtlich, die aus Leitungselement 4, Stützpolster 13, Lagerteil 15 und Innenschutzrohr 16 zusammengestellte Baueinheit axial in Richtung des Pfeiles 31 eingeschoben werden. Ist dies geschehen, so werden gemäß Figur 9 die Stützteile 9 und 10 aufeinander zu geklappt und soweit gegen das Stützpolster 13 gedrückt, daß in Richtung des Pfeiles 32 der bereits beschriebene Ring 22 in die ausgezeichnet dargestellte Position aufgeschoben werden kann. Werden nun die Stützteile 9, 10 von dem genannten Druck befreit, legen sie sich durch Rückfederung des Stützpolster 13 von innen fest gegen den Ring 22, womit dieser unverlierbar gehalten ist. Das so entstandene Verbindungselement gemäß Figur 9 kann dann in die aus den Figuren 1 und 2 ersichtliche, die beiden Rohrteile 1 und 2 verbindende Position gebracht und mit den Rohrteilen 1 und 2 durch die Schweißungen 7 und 8 verbunden werden.

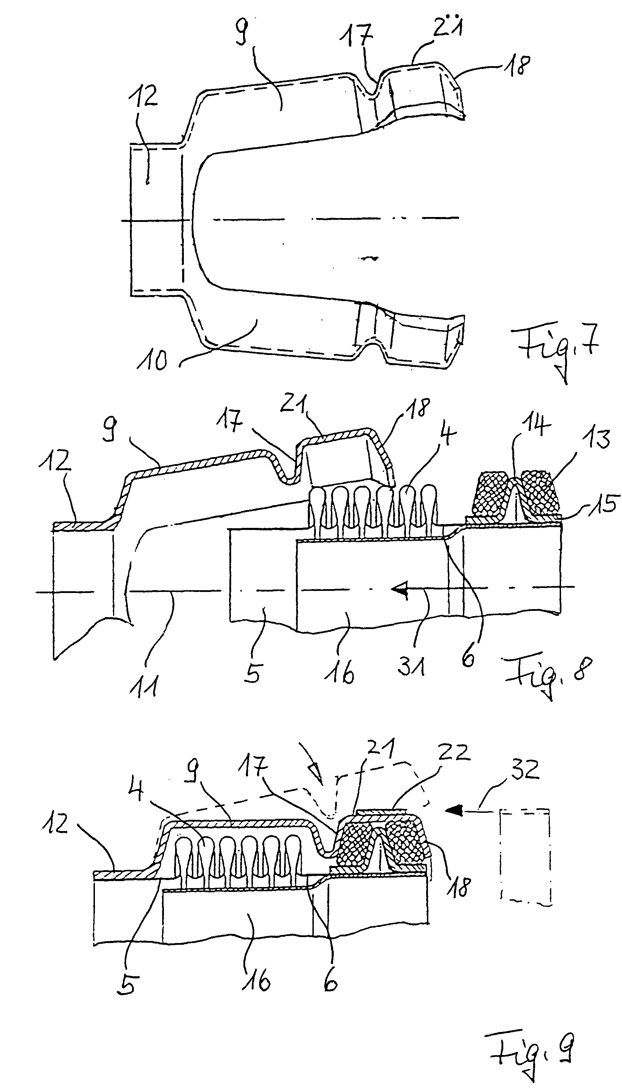

Die anhand der Figuren 1 bis 9 beschriebene Ausführungsform eines Verbindungselementes weist für gegenseitige Winkelbewegungen der Rohrteile 1 und 2 nur eine im Bereich der Stützpolster 13 gegebene Gelenkstelle auf. Insbesondere für zu erwartende größere Winkelbewegungen kann es aber zweckmäßig sein, das Verbindungselement mit zwei Gelenkstellen je an einem Ende diametral einander gegenüberliegender Stützteile 40 auszubilden, wie dies in den Figuren 10 und 11 veranschaulicht ist, die wiederum ein Verbindungselement im axialen Halbschnitt und in hälftiger Draufsicht dazu zeigen. Soweit bisher bereits beschriebene Bauteile erneut Verwendung finden, wird für diese die bereits eingeführte Bezifferung benutzt, was auch für die nachfolgende Beschreibung weiterer Ausführungsformen gilt.

Wie aus Figur 10 und 11 ersichtlich, sind nun die Stützteile 40 an beiden Enden in der beschriebenen Weise zur Aufnahme eines Stützpolsters 13 geeignet, das jeweils auf der Ausbeulung 14 eines Lagerteiles 15 sitzt. Da auf diese Weise die Verwendung eines Rohrstückes 12 der beschriebenen Art entfällt, müssen nunmehr die einander gegenüberliegenden Stützteile 40 an beiden Enden durch je einen aufgesetzten Ring 22 gehalten werden, wobei die Positionierung der Stützteile 40 in Umfangsrichtung zur Achse 11 sich aus dem Zusammenwirken der bereits anhand der Figuren 3 und 4 beschriebenen Abbiegungen 19, 20 mit den in Umfangsrichtung gehalterten Stützpolstern 13 ergibt.

Die Bauform nach den Figuren 10 und 11 läßt ebenso einfach die Montage der Stützteile 40 durch Aufsetzen auf die Stützpolster 13 und anschließendes Aufschieben der Ringe 22 zu, wobei anstelle zweier diametral einander gegenüberliegender Stützteile 40 auch beispielsweise gleichmäßig über den Umfang verteilt drei Stützteile 40 vorgesehen werden können.

Die Bauform nach den Figuren 12 bis 15 stellt eine Abwandlung der Bauform nach den Figuren 1 bis 3 dar, die jedoch bei diesen ebenso anwendbar wäre. Der Unterschied besteht hier darin, daß der die Stützteile 41, 42 zusammenhaltende Ring 43 auf diese im Bereich des gewellten Teils des Leitungselementes 4 aufgesetzt ist. Damit hier durch die Stützteile 41, 42 dem Ring 43 eine genügende Radialkraft zu dessen festem Sitz entgegengebracht werden kann, sind die Stützteile 41, 42, wie aus Figur 14 ersichtlich, im Bereich des gewellten Teils des Leitungselementes 4 als in Umfangsrichtung gegeneinanderstoßende Bauteile ausgeführt, deren Stoßkanten 44, 45 zur Achse 11 des Verbindungselementes parallel verlaufen und formschlüssig gegen radialen Versatz miteinander verbunden sind, was im dargestellten Beispiel durch angeformte, sich in Umfangsrichtung erstreckende und jeweils das benachbarte Stützteil hintergreifende Laschen 46, 47 geschieht.

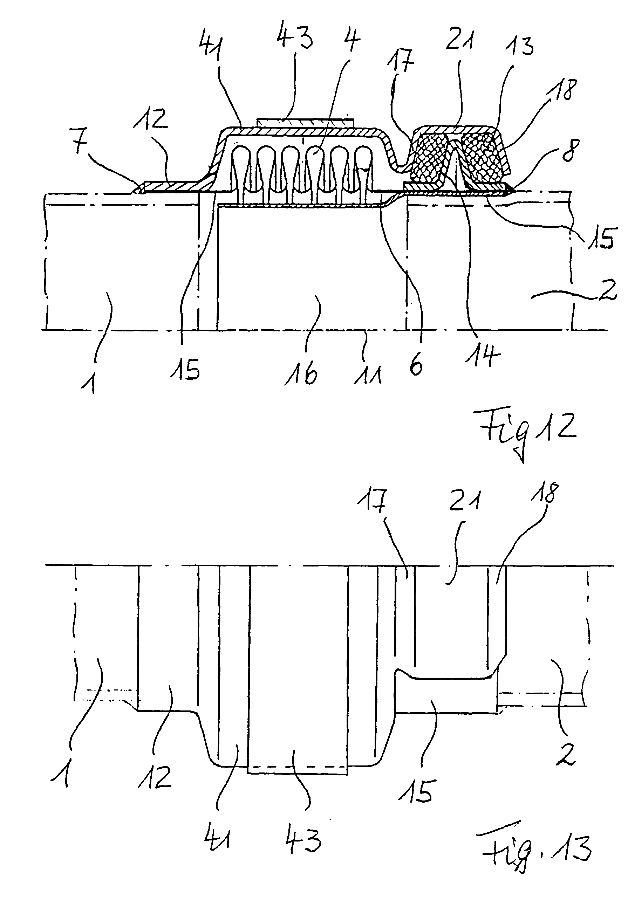

Während die Ausführungsform gemäß Figur 12 bis 15 ein Verbindungselement mit einer Gelenkstelle betrifft, zeigen in entsprechender Ausbildung die Figuren 16 bis 18 wieder ein Verbindungselement mit zwei Gelenkstellen der bereits anhand der Figuren 10 und 11 beschriebenen Art. Hier sind die Stützteile 50, 51, die mit ihren beiden Enden je auf einem Stützpolster 13 sitzen, im gewellten Bereich des Leitungselementes 4 als in Umfangsrichtung gegeneinander stoßende und den Ring 43 tragende Bauteile ausgebildet, deren Stoßkanten 52, 53 zur Achse 11 des Verbindungselementes parallel verlaufen und formschlüssig gegen radialen Versatz durch Laschen 54, 55 gehalten sind.

Während bei den bisher beschriebenen Bauformen die zentrale Halterung der Stützpolster 13 immer vom Lagerteil 15 mittels einer Ausbeulung 14 ausging, zeigen die Figuren 19 und 20 Beispiele dafür, daß diese zentrale Halterung auch von einander gegenüberliegenden Stützteilen 60 in Form einer Ausbeulung 61 der mit der Ausbeulung 14 vergleichbaren Art erfolgen kann, wobei die Stützteile 60 wieder einstückig mit einem Rohrstück 62 verbunden sein können, das dem früher beschriebenen Rohrstück 12 entspricht. Die Herstellung und Montage geschieht dann wieder in der anhand der Figuren 6 bis 9 beschriebenen Art.

Hier ist nun das Lagerteil 63 mit im wesentlichen U-förmigem Querschnitt um die Achse 11 umlaufend ausgebildet, so daß es beiderseits die Axialabstützung und außerdem die radial innere Abstützung des Stützpolsters 13 übernehmen kann. Der die Stützteile 60 zusammenhaltende Ring 64 kann bei der Ausführung nach Figur 19 Kreisquerschnitt haben und von außen in die Ausbeulung 61 eingerastet sein. Demgegenüber ist bei der Ausführung nach Figur 20 der Ring 65 wieder mit einem flachrechteckigen Querschnitt versehen und neben der Ausbeulung 61 auf den den gewellten Teil des Leitungselementes 4 überbrückenden Abschnitt der Stützteile 60 aufgesetzt.

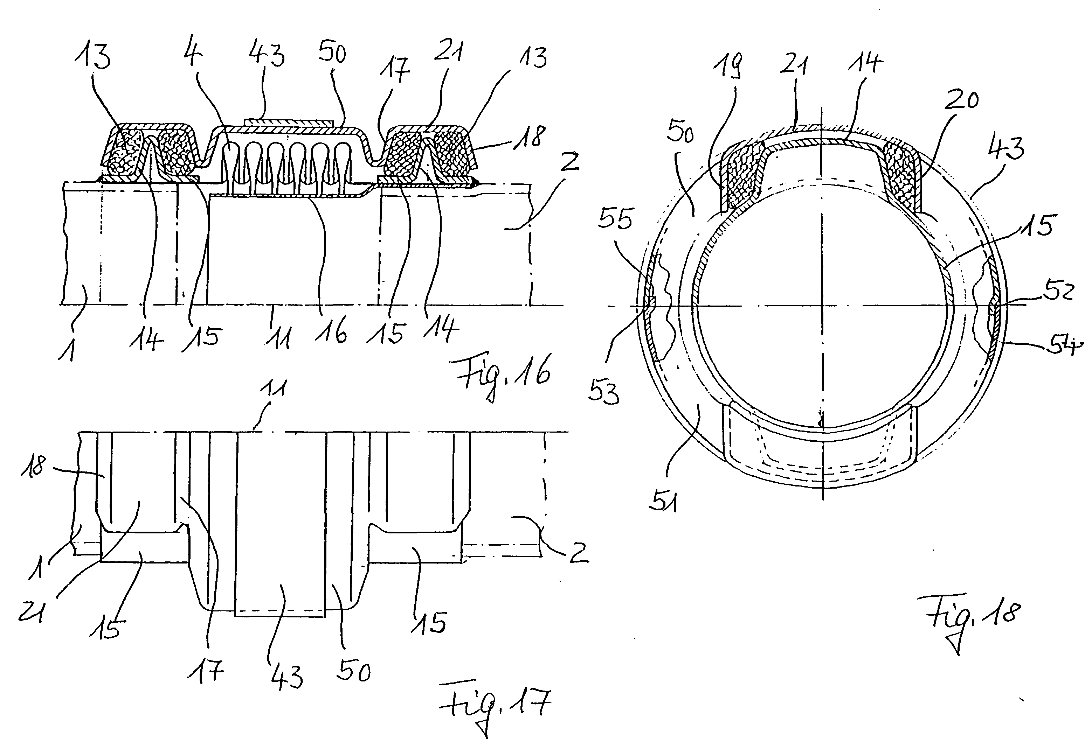

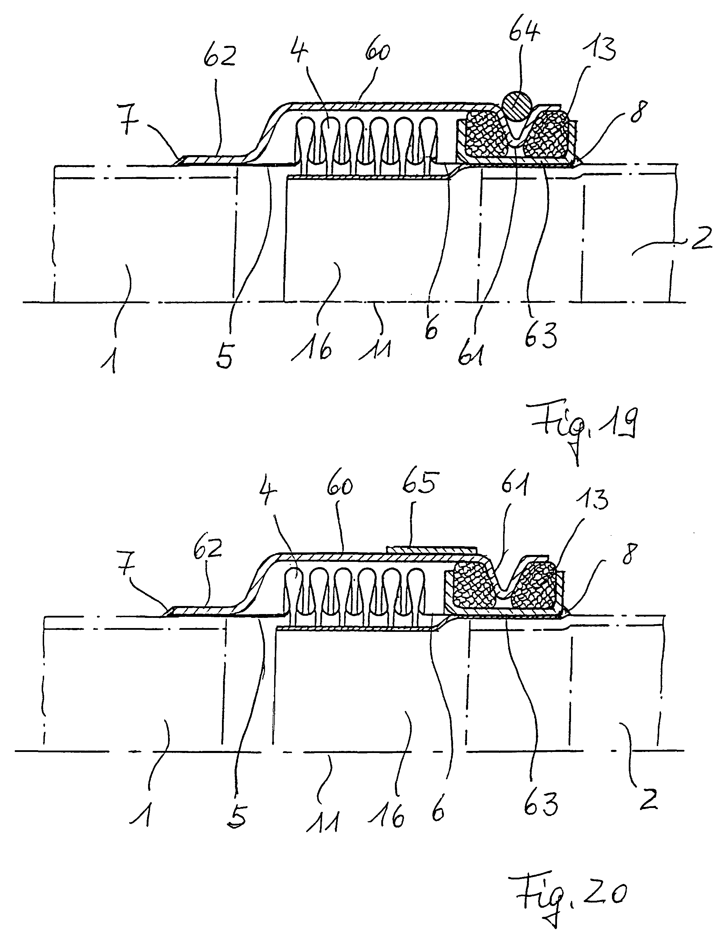

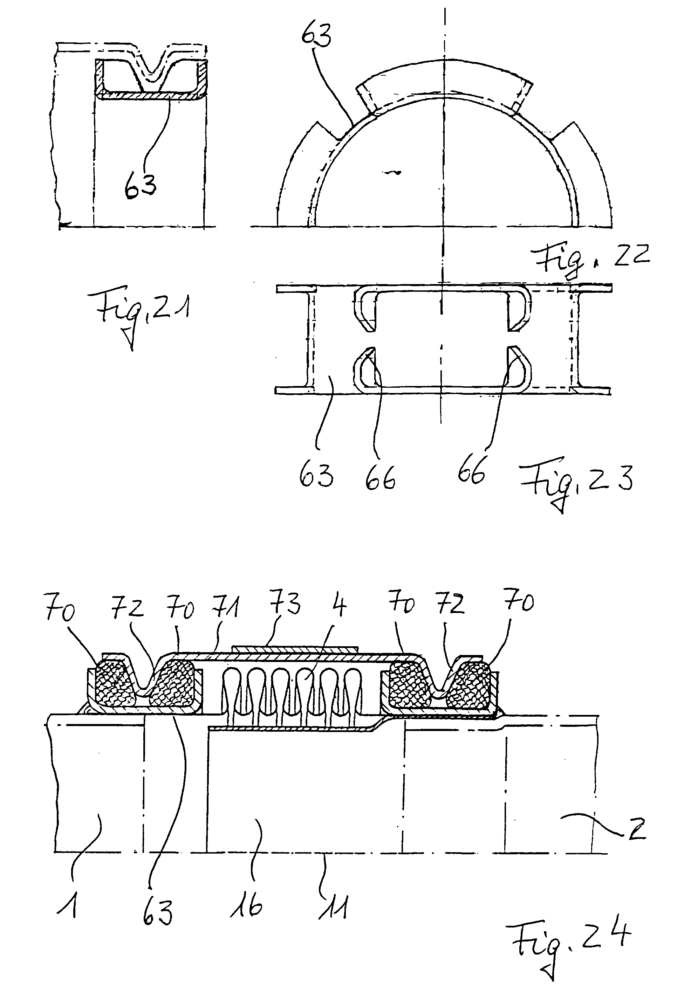

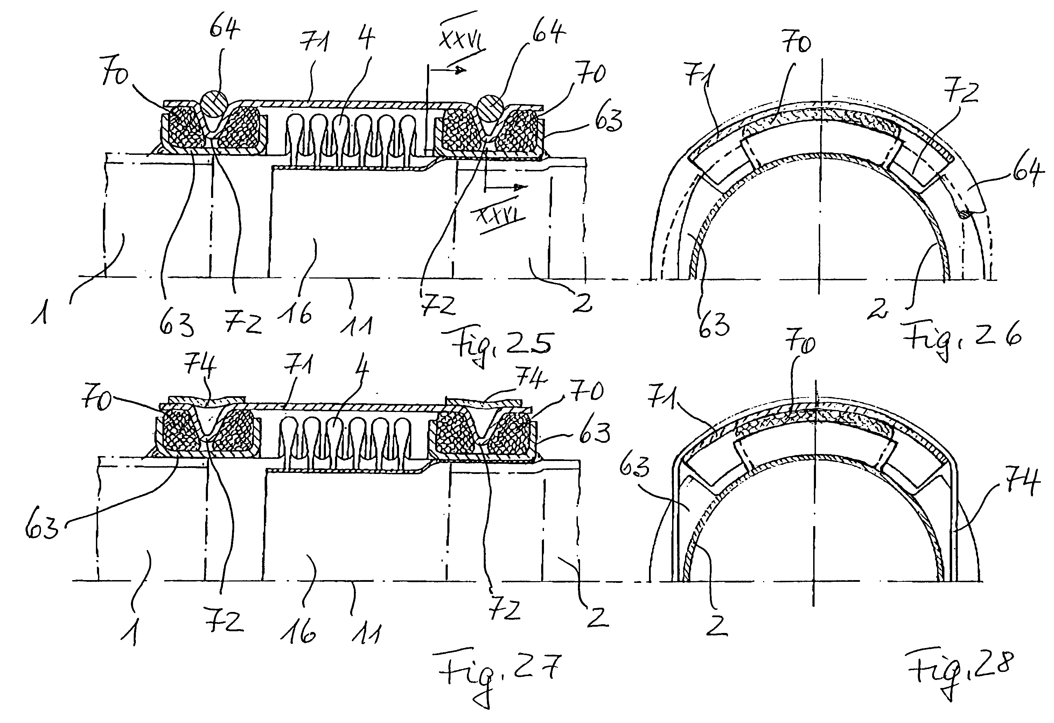

Anstelle von Stützpolstern 13 können jedoch bei den Ausführungsformen gemäß Figur 19 und 20 auch Stützpolster in Form von Ringsegmenten 70 verwendet werden, wie sie aus den Ansichten gemäß Figur 26 bzw. Figur 28 ersichtlich sind. Hierbei können, wie aus den Figuren 21 bis 23 ersichtlich, die Lagerteile 63 mit aus den Schenkeln ihres U-förmigen Querschnittes geformten Abbiegungen 66 versehen sein, um die Stützpolster 70 in Umfangsrichtung zu positionieren. Dabei ist dann anstelle der Ausbeulung 61 gemäß Figur 19 bzw. Figur 20 für die Stützteile eine entsprechend umlaufende Sicke möglich, um jeweils zwei nebeneinanderliegende Stützpolstersegmente 70 axial voneinander zu distanzieren und zu stützen.

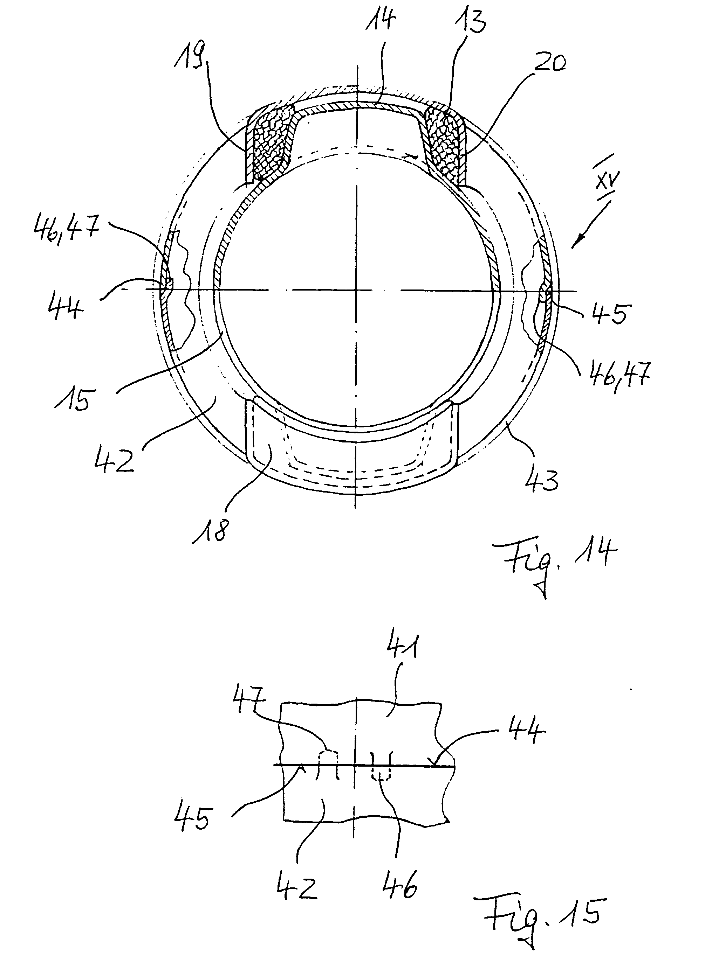

Die Figuren 24 bis 28 zeigen weitere Beispiele der anhand der Figuren 19 und 20 beschriebenen Art, bei denen wieder ringförmige Stützpolster 13 verwendet werden könnten, hier jedoch Stützpolster 70 in Form von Ringsegmenten verwendet sein sollen. Dabei stellt Figur 24 wieder den axialen Halbschnitt einer Doppelgelenkausbildung dar, wobei zwei einander gegenüberliegende Stützteile 71 im Bereich der Stützpolster 70 mit nach radial innen gerichteten, umlaufenden Sicken 72 an beiden Enden versehen sind, die die nebeneinanderliegenden Stützpolster 70 distanzieren. Die Stützpolster 70 sitzen in Lagerteilen 63 der aus den Figuren 21 bis 23 ersichtlichen Art. Zusammengehalten werden die Stützteile 71 durch einen Ring 73 im Bereich des gewellten Teils des Leitungselementes 4. Was die Festlegung der Stützteile 71 in Umfangsrichtung um die Achse 11 betrifft, so kann wieder von der anhand der Figuren 16 bis 18, insbesondere Figur 18 beschriebenen Bauweise Gebrauch gemacht werden.

Die Ausführungsformen nach den Figuren 25 bis 28 unterscheiden sich von der nach Figur 24 nur dadurch, daß gemäß Figur 25 und 26 wieder Ringe 64 mit Kreisquerschnitt der aus Figur 19 ersichtlichen Art Verwendung finden, während gemäß Figur 27 und 28 im Bereich der Sicken 72 von außen Ringe 74 mit flach-rechteckigem Querschnitt aufgesetzt sind, die sich unter der durch die Rückfederung der Stützpolster 70 gegebenen Vorspannung etwas in die Sicken 72 einziehen können.

Wie aus den Figuren 26 und 28 ersichtlich, verlaufen die Ringe 64 bzw. 74 im Bereich zwischen den einander gegenüberliegenden Stützteilen 71 stramm entlang einer weiter radial innen liegenden Bahn und innerhalb des durch das U-Profil der Lagerteile 63 gegebenen Querschnittes.

Während bisher die dargestellten und beschriebenen Stützpolster im wesentlichen Preßteile aus einem Drahtmaterial sind, zeigen die Figuren 29 bis 31 eine Möglichkeit, anstelle der Stützringe 13 Schraubenfedern 80, 81 zu verwenden. Dabei entspricht die Bauform gemäß Figur 29 an sich der Bauform gemäß Figur 10, so daß insoweit bei Figur 29 die bereits in Figur 10 eingeführte Bezifferung der Teile wiederverwendet wird und im übrigen auf die Beschreibung zu Figur 10 Bezug genommen wird.

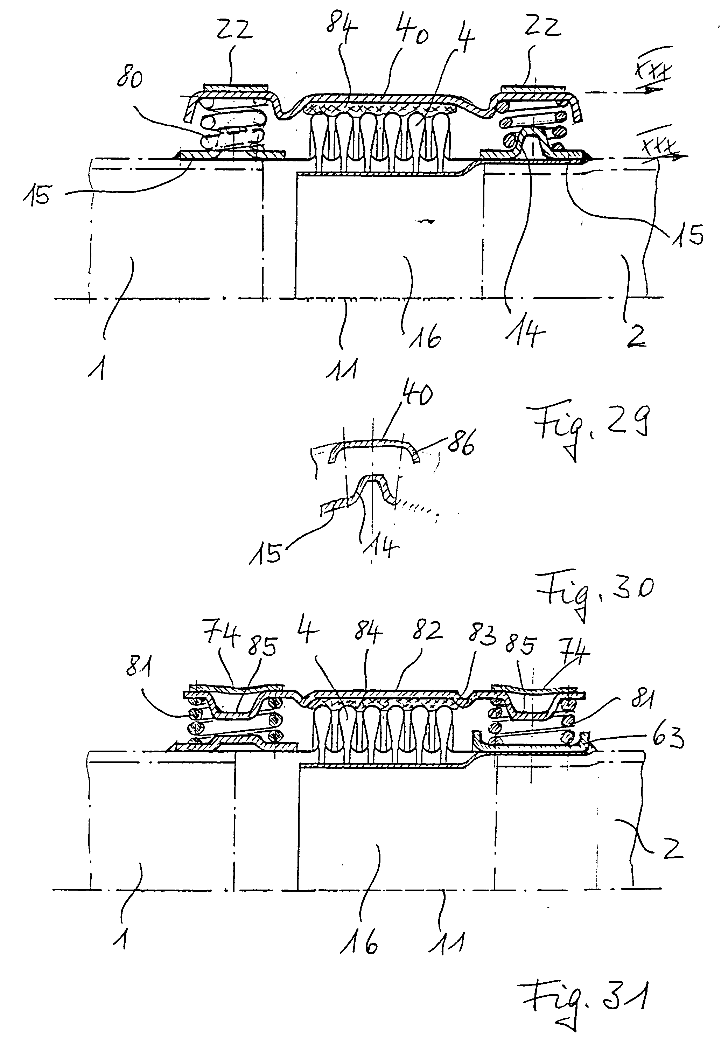

Entsprechendes gilt zu der Ausführungsform gemäß Figur 31 im Hinblick auf Figur 27, wobei bei Figur 31 allerdings das Stützteil 82 noch mit zusätzlichen Eindrückungen 83 versehen ist. Diese dienen dazu, ein zwischen Stützteil 82 und Leitungselement 4 eingelegtes Dämpfungkissen 84 in Axialrichtung abzustützen. Außerdem sind bei Figur 31 am Stützteil 82 Ausbeulungen 85 zum zentrischen Eingriff in die Federn 81 vorgesehen anstelle der Sicken 72 gemäß Figur 27.

Ein Dämpfungskissen 84 der anhand der Figur 31 beschriebenen Art ist auch beim Gegenstand der Figur 29 vorhanden. Figur 30 zeigt in der Schnittansicht XXX-XXX aus Figur 29 die Abstüztung der Federn 80 am Stützteil 40 in der Umfangsrichtung über Abbiegungen 86. Entsprechend kann auch die Abstützung des Dämpfungskissens 84 in Umfangsrichtung ausgebildet sein.

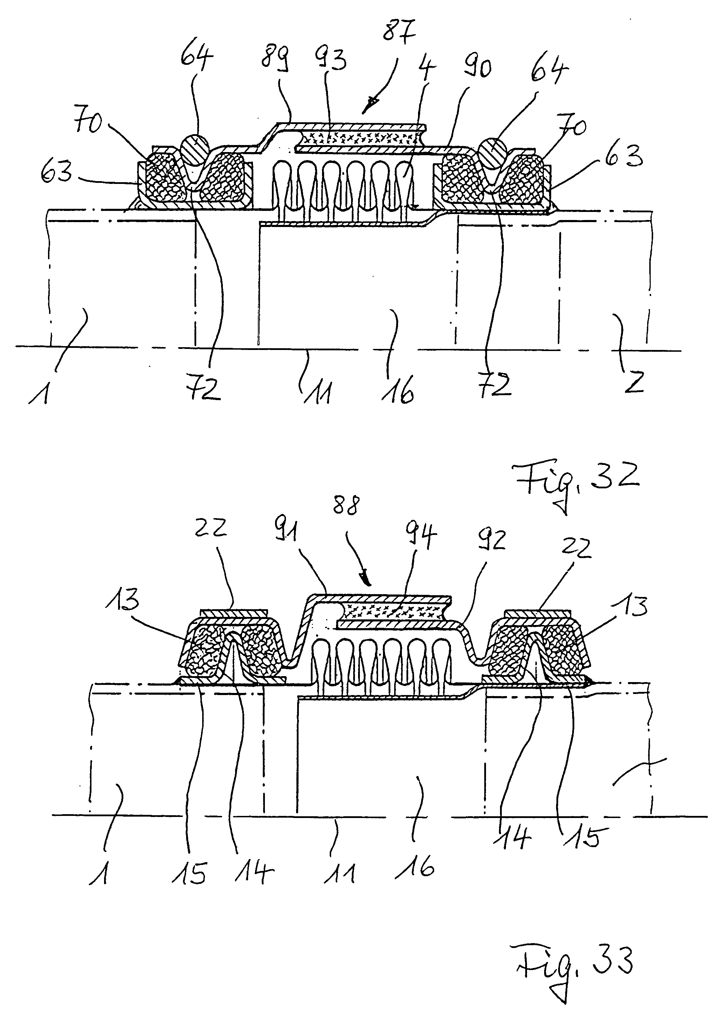

Die Figuren 32 und 33 zeigen je eine Abwandlung der Bauformen nach den Figuren 25 bzw. 10, weshalb insoweit wieder die dort eingeführte Bezifferung verwendet ist.

Der Unterschied besteht darin, daß das jeweilige Stützteil 87 bzw. 88 in Längsrichtung unter Bildung zweier Stützteilabschnitte 89, 90 bzw. 91, 92 geteilt ist, die sich in Axialrichtung teilweise überdecken und im Überdeckungsbereich durch ein Zwischenelement 93 bzw. 94 miteinander verbunden sind, das beispielsweise ein Elastomerkissen sein kann, das mit den Stützteilabschnitten 89, 90 bzw. 91, 92 durch Vulkanisation verbunden ist. Ein solches kissenförmiges Zwischenelement dient dazu, die Weiterleitung von Schwingungen über das Stützteil 87 bzw. 88 zu unterbinden.

Schließlich zeigt Figur 34 eine zweiflutige Leitung, wobei der Aufgabe des Verbindungselementes für jede der Leitungen an sich bei diesem Beispiel der Bauform gemäß Figur 10 entspricht, so daß auf diese hinsichtlich der Einzelbeschreibung unter Verwendung der dort angeführten Bezifferung Bezug genommen werden. Selbstverständlich können auch andere der bisher beschriebenen Bauformen für die zweiflutige Leitung angewendet werden.

Der Gegenstand gemäß Figur 34 ist dadurch weitergebildet, daß benachbarte Rohrteile 1 bzw. 2 gegeneinander über Distanzstücke 95 abgestützt sind. Außerdem sind für diese Leitungsanordnung nur zwei einander gegenüberliegende Stützteile 40 gemeinsam vorgesehen, wobei dann aber das jeweilige Spannelement 96 die gesamte Anordnung außen umfaßt und damit auch die Rohrteile 1 bzw. 2 gegeneinander die Distanzstücke 95 drückt, die im übrigen, wie aus der Zeichnung ersichtlich, an die Außenkontur der Rohrteile 1, 2 angepaßt und mit diesen verschweißt sind.

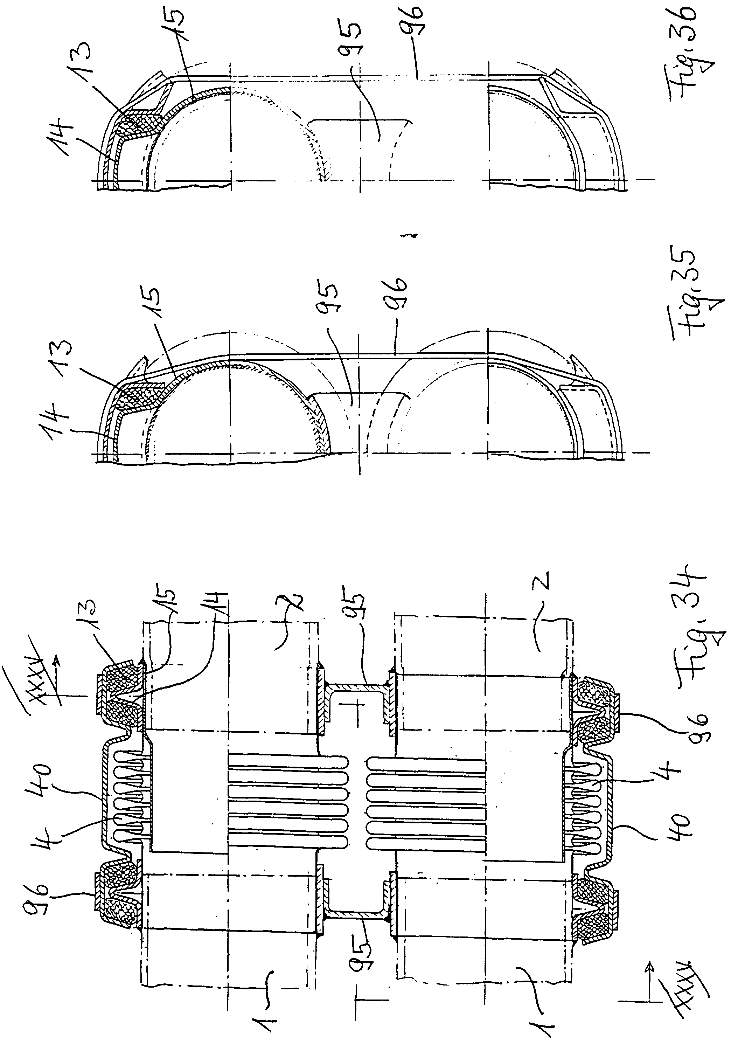

Die Figuren 35 und 36 zeigen jeweils eine Schnittansicht entlang der Schnittlinie XXXV-XXXV in Figur 34, die zeigt, daß im übrigen die Ausbildung in der bereits anhand der Figuren 3 bis 5 beschriebenen Weise erfolgen.

## Patentansprüche

1. Gelenkiges Verbindungselement für Rohrteile (1, 2), insbesondere Rohrteile von Abgasleitungen der Verbrennungsmotore von Kraftfahrzeugen, bestehend aus mindestens einem flexiblen, wenigstens mittelbar mit den Rohrteilen (1, 2) dicht verbundenen Leitungselement (4) sowie wenigstens einem außerhalb des Leitungselementes angeordneten, mit den Rohrteilen zumindest mittelbar verbundenen Stützelement (9, 10, 40, 41, 42, 50, 51, 60, 71, 82, 87, 88), von dem wenigstens ein Endbereich mit dem diesem benachbarten Rohrteil über mindestens ein Stützpolster (13, 70, 80, 81) mit gedämpft federnden Eigenschaften sowie ein dieses aufnehmendes Lagerteil (14, 15, 63) in angular zueinander beweglich geführter, gegenseitig tragender Verbindung steht, wobei das Stützpolster beidseits in Axial-, Radial- und gegebenenfalls Umfangsrichtung gegen das Stützelement und/oder das Lagerteil (14, 15, 63) in Anlage ist,
dadurch gekennzeichnet,
daß das Stützelement durch wenigstens zwei das Leitungselement (4) im wesentlichen achsparallel übergreifende, mit ihren Enden radial zur Achse (11) des Verbindungselementes gegen das Stützpolster (13, 70, 80, 81) bzw. das zugeordnete Rohrteil (1, 2) widergelagerte Stützteile (9, 10, 40, 41, 42, 50, 51, 60, 71, 82, 87, 88) gebildet ist, und daß das Verbindungselement wenigstens ein Spannmittel (22, 43, 64, 65, 74, 96) aufweist, das die Stützteile (9, 10, 40, 41, 42, 50, 51, 60, 71, 82, 87, 88) außen umschlingt und in Radialrichtung aufeinander zu gerichtet zusammengehält.

2. Verbindungselement nach Anspruch 1,
dadurch gekennzeichnet,
daß die Stützteile (9, 10, 40, 41, 42, 50, 51, 60, 71, 82, 87, 88) gleichmäßig über den Umfang des Verbindungselementes verteilt angeordnet sind.

3. Verbindungselement nach Anspruch 1 oder 2,
dadurch gekennzeichnet,
daß die Stützteile (9, 10, 40, 41, 42, 50, 51, 60, 71, 82 ,87, 88) als um die Achse (11) des Verbindungselementes gewölbte, schalenförmige Bauteile ausgebildet sind.

4. Verbindungselement nach einem der Ansprüche 1 bis 3,
dadurch gekennzeichnet,
daß das Stützpolster (13, 70, 80, 81) und damit die Stützteile (9, 10, 40, 41, 42, 50, 51, 60, 71, 82, 87, 88) wenigstens auf oder in der Nähe der Hauptbewegungsachse des Verbindungselementes angeordnet sind.

5. Verbindungselement nach einem der Ansprüche 1 bis 4,
dadurch gekennzeichnet,
daß das Stützelement zwei Stützteile (9, 10, 41, 42, 60) aufweist, wobei sich die Stützteile mit einem ihrer Endbereiche mit dem Stützpolster (13, 70, 80, 81) in Eingriff befinden, und deren andere Enden einstückig mit einem dort auf das zugeordnete Rohrteil (1) aufsetzbaren und an diesem gegebenenfalls zusammen mit dem zugehörenden Ende des Leitungselementes (4) festlegbaren Rohrstück (12, 62) verbunden sind.

6. Verbindungselement nach einem der Ansprüche 1 bis 5,
dadurch gekennzeichnet,
daß das Stützelement aus einem streifenförmigen Blechzuschnitt (26) hergestellt ist durch mittiges Tiefziehen und Lochen des Rohrstückes (12, 62) und anschließendes Formen und Abbiegen der Stützteile (9, 10, 41, 42, 60) aus den sich an das Rohrstück beidseits anschließenden Teilen (29, 30) des Blechzuschnittes (26) in eine zur Achse des Rohrstückes (12, 62) im wesentlichen parallele Position.

7. Verbindungselement nach einem der Ansprüche 1 bis 6,
dadurch gekennzeichnet,
daß bei einem Stützelement mit Stützteilen (40, 50, 51, 71, 82, 87, 88), die mit beiden Endbereichen mit wenigstens einem Stützpolster (13, 70, 80, 81) in Eingriff sind, die Stützteile (40, 41, 42, 50, 51, 71, 82, 87, 88) im Längenbereich zwischen den Endbereichen als in Umfangsrichtung des Verbindungselementes gegeneinanderstoßende Bauteile ausgebildet sind.

8. Verbindungselement nach Anspruch 7,
dadurch gekennzeichnet,
daß die gegenseitigen Stoßkanten (44, 45, 52, 53) der Stützteile (40, 41, 42, 50, 51, 71, 82, 87, 88) zur Achse (11) des Verbindungselementes parallel verlaufend ausgebildet sind.

9. Verbindungselement nach Anspruch 7 oder 8,
dadurch gekennzeichnet,
daß die Stützteile (40, 41, 42, 50, 51, 71, 82, 87, 88) im Bereich der Stoßkanten (44, 45, 52, 53) formschlüssig gegen radialen Versatz miteinander verbunden sind.

10. Verbindungselement nach Anspruch 9,
dadurch gekennzeichnet,
daß die formschlüssige Verbindung durch an die Stützteile (40, 41, 42, 50, 51, 71, 82, 87, 88) angeformte, sich in Umfangsrichtung erstreckende und jeweils das benachbarte Stützteil hintergreifende Laschen (46, 47, 54, 55) gebildet ist.

11. Verbindungselement nach einem der Ansprüche 1 bis 10,
dadurch gekennzeichnet,
daß das Lagerteil (15, 63) als ringförmig um die Achse (11) des Verbindungselementes umlaufendes und mit dem zugeordneten Ende des Leitungselementes (4) dicht verbundenes Bauteil ausgebildet ist.

12. Verbindungselement nach Anspruch 11,
dadurch gekennzeichnet,
daß das Lagerteil (15, 63) auf einen zylindrischen Endbereich des Leitungselementes (4) aufgesetzt ist.

13. Verbindungselement nach einem der Ansprüche 1 bis 12,
dadurch gekennzeichnet,
daß das Stützpolster als um die Achse (11) des Verbindungselementes umlaufender Stützring ausgebildet ist.

14. Verbindungselement nach einem der Ansprüche 1 bis 12,
dadurch gekennzeichnet,
daß das Stützpolster (13, 80, 81) als um eine zur Achse (11) des Verbindungselementes senkrechte Achse (3) umlaufender Stützring ausgebildet ist.

15. Verbindungselement nach Anspruch 14,
dadurch gekennzeichnet,
daß die zentrale Öffnung des Stützringes (13, 80, 81) formschlüssig auf einer zur Achse (11) des Verbindungselementes radial gerichteten Ausbeulung (14, 61, 85) des zugeordneten Endbereiches des Stützteiles (60, 82) und/oder des Lagerteiles (15) sitzt, und daß der Stützring (13, 80, 81) radial außen durch Abbiegungen und/oder Ausbeulungen des Stützteiles (9, 10, 40, 41, 42, 50, 51, 60, 71, 82, 87, 88) und/oder des Lagerteiles (15, 63) in Axialrichtung des Verbindungselementes abgestützt ist.

16. Verbindungselement nach Anspruch 14 oder 15,
dadurch gekennzeichnet,
daß der Stützring als Schraubenfeder (80, 81) ausgebildet ist.

17. Verbindungselement nach einem der Ansprüche 1 bis 12,
dadurch gekennzeichnet,
daß das Stützpolster (70) als zur Achse (11) des Verbindungselementes zentrisches Ringsegment ausgebildet ist.

18. Verbindungselement nach Anspruch 17,
dadurch gekennzeichnet,
daß das Ringsegment (70) durch mit seinen in Umfangsrichtung weisenden Enden in formschlüssigen Eingriff befindliche Abbiegungen (66) und/oder Ausbeulungen des Stützteiles und/oder des Lagerteiles (63) in Umfangsrichtung festgelegt ist.

19. Verbindungselement nach Anspruch 17 oder 18,
dadurch gekennzeichnet,
daß bei zwei das Stützpolster bildenden, axial nebeneinander angeordneten Ringsegmenten (70) zwischen diesen eine konzentrische, radial gerichtete Ausbeulung (61, 72) des zugeordneten Endbereiches des Stützteiles (60, 71) und/oder des Lagerteiles in formschlüssigem Eingriff ist.

20. Verbindungselement nach einem der Ansprüche 1 bis 19,
dadurch gekennzeichnet,
daß das Spannmittel (22, 43, 64, 65, 73, 74, 96) ein Ring mit rechteckigem, rundem, ovalem oder polygonalem Materialquerschnitt ist.

21. Verbindungselement nach Anspruch 20,
dadurch gekennzeichnet,
daß der Ring wenigstens eine durch Verschlußmittel zusammenfügbare Teilungsstelle aufweist.

22. Verbindungselement nach Anspruch 21,
dadurch gekennzeichnet,
daß die Verschlußmittel durch wenigstens ein an den beiden die Teilungsstelle bildenden Ringenden angreifendes Verbindungsglied gebildet sind.

23. Verbindungselement nach Anspruch 22,
dadurch gekennzeichnet,
daß das Verbindungsglied eine Spannschraube ist.

24. Verbindungselement nach Anspruch 20,
dadurch gekennzeichnet,
daß der Ring (22, 43, 64, 65, 73, 74, 96) geschlossen umlaufend und in seinem lichten Querschnitt derart bemessen ist, daß er auf den Stützteilen (9, 10, 40, 41, 42, 50, 51, 60, 71, 82, 87, 88) unter vorherbestimmter radialer und gegebenenfalls axialer Vorspannung der Stützpolster (13, 70, 80, 81) sitzt.

25. Verbindungselement nach Anspruch 24,
dadurch gekennzeichnet,
daß der Ring (22, 43, 64, 65, 73, 74, 96) auf die Stützteile (9, 10, 40, 41, 42, 50, 51, 60, 71, 82, 87, 88) bei radialer Überpressung der Stützpolster (13, 70, 80, 81) durch die Stützteile aufgesetzt ist.

26. Verbindungselement nach einem der Ansprüche 1 bis 25,
dadurch gekennzeichnet,
daß der Ring (64) in einer zur Achse (11) des Verbindungselementes konzentrische radiale Vertiefung der Stützteile (60, 71) eingreifend gegen axiale Verschiebung gesichert ist.

27. Verbindungselement nach einem der Ansprüche 1 bis 26,
dadurch gekennzeichnet,
daß die Stützteile (87, 88) im wesentlichen im Bereich der Mitte ihrer zur Achse (11) des Verbindungselementes parallelen Längserstreckung unter Bildung zweier Stützteilabschnitte (89, 90, 91, 92) geteilt ausgebildet sind, und daß die Stützteilabschnitte (89, 90, 91, 92) durch ein Zwischenelement (93, 94) aus einem elastischen, temperaturbeständigen Material miteinander verbunden sind.

28. Verbindungselement nach Anspruch 27,
dadurch gekennzeichnet,
daß das elastische, temperaturbeständige Material ein Elastomer ist.

29. Verbindungselement nach Anspruch 27 oder 28,
dadurch gekennzeichnet,
daß die Stützteilabschnitte (89, 90, 91, 92) sich in Axialrichtung teilweise überdecken, und daß das Zwischenelement (93, 94) als die Stüztteilabschnitte (89, 90, 91, 92) im Überdeckungsbereich miteinander verbindendes Kissen ausgebildet ist.

30. Verbindungselement nach einem der Ansprüche 27 bis 29,
dadurch gekennzeichnet,
daß das Zwischenelement (93, 94) mit den Stützteilabschnitten durch Kleben, Vulkanisation oder dergleichen Fügeverfahren verbunden ist.

31. Verbindungselement nach einem der Ansprüche 1 bis 30,
dadurch gekennzeichnet,
daß zwischen den Stützteilen (9, 10, 40, 41, 42, 50, 51, 60, 71, 82, 87, 88) und dem flexiblen Mittelbereich des Leitungselementes (4) ein in Axial-, Radial- und Umfangsrichtung festgelegtes Dämpfungskissen (84) angeordnet ist.

32. Verbindungselement nach Anspruch 31,
dadurch gekennzeichnet,
daß das Dämpfungskissen (84) ein aus einem Geflecht, Gewirke oder Gestricke aus Metalldraht gepreßtes Teil ist.

33. Verbindungselement nach einem der Ansprüche 1 bis 32,
dadurch gekennzeichnet,
daß bei mehrflutigen Leitungen benachbarte Rohrteile (1, 2) durch Distanzstücke (95) gegeneinander abgestützt sind, die Stützteile auf im wesentlichen einander gegenüberliegenden Außenseiten der Leitungsanordnung vorgesehen sind, und die Spannmittel (96) die Leitungsanordnung und die Stützteile (40) außen umfassend und die Rohrteile (1, 2) gegen die Distanzstücke (95) drückend vorgesehen sind.

## Claims

1. Articulated connecting element for pipe components (1, 2), especially pipe components of exhaust ducts of combustion engines of motor vehicles, consisting of at least one flexible duct element (4) that is sealingly connected at least indirectly to the pipe components (1, 2) and at least one support element (9, 10, 40, 41, 42, 50, 51, 60, 71, 82, 87, 88) arranged outside the duct element and at least indirectly connected to the pipe components, at least one end region of which is connected to the adjacent pipe component, by way of at least one support pad (13, 70, 80, 81) having damped resilient properties and a bearing component (14, 15, 63) that accommodates the latter, in such a manner that they are capable of angular movement relative to one another and are mutually supporting, the support pad being in contact on both sides in the axial, radial and optionally circumferential direction with the support element and/or the bearing component (14, 15, 63),
characterised in that
the support element is formed by at least two support members (9, 10, 40, 41, 42, 50, 51, 60, 71, 82, 87, 88) which engage over the duct element (4) substantially axially parallel and, in the radial direction relative to the axis (11) of the connecting element, are supported by their ends against the support pad (13, 70, 80, 81) or the associated pipe component (1, 2), and the connecting element has at least one clamping means (22, 43, 64, 65, 74, 96) which extends around the outside of the support members (9, 10, 40, 41, 42, 50, 51, 60, 71, 82, 87, 88) and holds them together facing towards one another in the radial direction.

2. Connecting element according to claim 1,
characterised in that
the support members (9, 10, 40, 41, 42, 50, 51, 60, 71, 82, 87, 88) are arranged uniformly over the circumference of the connecting element.

3. Connecting element according to claim 1 or 2,
characterised in that
the support members (9, 10, 40, 41, 42, 50, 51, 60, 71, 82, 87, 88) are in the form of dish-shaped components that are curved around the axis (11) of the connecting element.

4. Connecting element according to any one of claims 1 to 3,
characterised in that
the support pad (13, 70, 80, 81) and therewith the support members (9, 10, 40, 41, 42, 50, 51, 60, 71, 82, 87, 88) are arranged at least on or in the vicinity of the main axis of movement of the connecting element.

5. Connecting element according to any one of claims 1 to 4,
characterised in that
the support element has two support members (9, 10, 41, 42, 60), the support members having one of their end regions in engagement with the support pad (13, 70, 80, 81) and having their other end formed integrally with a pipe piece (12, 62) that can there be mounted on the associated pipe component (1) and can be fixed in position thereon, optionally together with the associated end of the duct element (4).

6. Connecting element according to any one of claims 1 to 5,
characterised in that
the support element is made from a strip-shaped sheet metal blank (26) by centrally deep-drawing and perforating the pipe piece (12, 62) and then shaping and bending the support members (9, 10, 41, 42, 60) from the portions (29, 30) of the sheet metal blank (26) that are adjacent to the pipe piece on both sides so that they assume a position substantially parallel to the axis of the pipe piece (12, 62).

7. Connecting element according to any one of claims 1 to 6,
characterised in that
in the case of a support element having support members (40, 50, 51, 71, 82, 87, 88) that have both end regions in engagement with at least one support pad (13, 70, 80, 81), the support members (40, 41, 42, 50, 51, 71, 82, 87, 88) in the longitudinal region between the end regions are in the form of components that abut one another in the circumferential direction of the connecting element.

8. Connecting element according to claim 7,
characterised in that
the abutting edges (44, 45, 52, 53) of the support members (40, 41, 42, 50, 51, 71, 82, 87, 88) are constructed to extend parallel to the axis (11) of the connecting element.

9. Connecting element according to claim 7 or 8,
characterised in that
the support members (40, 41, 42, 50, 51, 71, 82, 87, 88) are interlockingly connected to one another in the region of the abutting edges (44, 45, 52, 53) to counter radial displacement.

10. Connecting element according to claim 9,
characterised in that
the interlocking connection is formed by tabs (46, 47, 54, 55) formed integrally with the support members (40, 41, 42, 50, 51, 71, 82, 87, 88), which tabs extend in the circumferential direction and engage behind the respective adjacent support member.

11. Connecting element according to any one of claims 1 to 10,
characterised in that
the bearing component (15, 63) is in the form of a component that encompasses the axis (11) of the connecting element in the form of a ring and is sealingly connected to the associated end of the duct element (4).

12. Connecting element according to claim 11,
characterised in that
the bearing component (15, 63) is mounted on a cylindrical end region of the duct element (4).

13. Connecting element according to any one of claims 1 to 12,
characterised in that
the support pad is in the form of a supporting ring that encompasses the axis (11) of the connecting element.

14. Connecting element according to any one of claims 1 to 12,
characterised in that
the support pad (13, 80, 81) is in the form of a supporting ring that encompasses an axis (3) perpendicular to the axis (11) of the connecting element.

15. Connecting element according to claim 14,
characterised in that
the central opening of the supporting ring (13, 80, 81) is seated interlockingly on a protuberance (14, 61, 85) of the associated end region of the support member (60, 82) and/or of the bearing component (15), which protuberance (14, 61, 85) is directed radially towards the axis (11) of the connecting element, and the supporting ring (13, 80, 81) is supported radially on the outside by bent-over portions and/or protuberances of the support member (9, 10, 40, 41, 42, 50, 51, 60, 71, 82, 87, 88) and/or of the bearing component (15, 63) in the axial direction of the connecting element.

16. Connecting element according to claim 14 or 15,
characterised in that
the supporting ring is constructed in the form of a helical spring (80, 81).

17. Connecting element according to any one of claims 1 to 12,
characterised in that
the support pad (70) is in the form of a ring segment concentric with the axis (11) of the connecting element.

18. Connecting element according to claim 17,
characterised in that
the ring segment (70) is fixed in the circumferential direction by means of bent-over portions (66) and/or protuberances of the support member and/or of the bearing component (63) which are in interlocking engagement with the ends of the ring segment (70) that face in the circumferential direction.

19. Connecting element according to claim 17 or 18,
characterised in that
where there are two ring segments (70) arranged axially next to one another forming the support pad, a concentric, radially directed protuberance (61, 72) of the associated end region of the support member (60, 71) and/or of the bearing component is arranged in interlocking engagement between them.

20. Connecting element according to any one of claims 1 to 19,
characterised in that
the clamping means (22, 43, 64, 65, 73, 74, 96) is a ring having a rectangular, round, oval or polygonal material cross-section.

21. Connecting element according to claim 20,
characterised in that
the ring has at least one division site which can be joined together by closure means.

22. Connecting element according to claim 21,
characterised in that
the closure means are formed by at least one connecting member that engages the two ring ends forming the division site.

23. Connecting element according to claim 22,
characterised in that
the connecting member is a tensioning screw.

24. Connecting element according to claim 20,
characterised in that
the ring (22, 43, 64, 65, 73, 74, 96) is closed around its circumference and its internal cross-section is so dimensioned that it is seated on the support members (9, 10, 40, 41, 42, 50, 51, 60, 71, 82, 87, 88) under predetermined radial and optionally axial bias of the support pads (13, 70, 80, 81).

25. Connecting element according to claim 24,
characterised in that
the ring (22, 43, 64, 65, 73, 74, 96) is mounted on the support members (9, 10, 40, 41, 42, 50, 51, 60, 71, 82, 87, 88) by exertion of radial pressure over the support pad (13, 70, 80, 81) by means of the support members.

26. Connecting element according to any one of claims 1 to 25,
characterised in that
the ring (64) is secured against axial displacement by engagement in a radial depression in the support members (60, 71), which depression is concentric with the axis (11) of the connecting element.

27. Connecting element according to any one of claims 1 to 26,
characterised in that
the support members (87, 88) are constructed to be divided substantially in the region of the centre of their longitudinal extent parallel to the axis (11) of the connecting element to form two support member portions (89, 90, 91, 92), and the support member portions (89, 90, 91, 92) are connected to one another by an intermediate element (93, 94) made of a resilient, temperature-resistant material.

28. Connecting element according to claim 27,
characterised in that
the resilient, temperature-resistant material is an elastomer.

29. Connecting element according to claim 27 or 28,
characterised in that
the support member portions (89, 90, 91, 92) partially overlap in the axial direction, and the intermediate element (93, 94) is in the form of a cushion that connects the support member portions (89, 90, 91, 92) to one another in the region of overlap.

30. Connecting element according to any one of claims 27 to 29,
characterised in that the intermediate element (93, 94) is connected to the support member portions by adhesive bonding, vulcanisation or by a similar method of connection.

31. Connecting element according to any one of claims 1 to 30,
characterised in that
between the support members (9, 10, 40, 41, 42, 50, 51, 60, 71, 82, 87, 88) and the flexible central region of the duct element (4) there is arranged a damping cushion (84) which is fixed in position in the axial, radial and circumferential direction.

32. Connecting element according to claim 31,
characterised in that
the damping cushion (84) is a component compressed from a plaited, woven or knitted article made of metal wire.

33. Connecting element according to any one of claims 1 to 32,
characterised in that
in the case of multi-flow ducts, adjacent pipe components (1, 2) are supported one against the other by spacer pieces (95), the support members are provided on substantially opposing outer sides of the duct arrangement, and the clamping means (96) are provided encompassing the duct arrangement and the support members (40) on the outside and pressing the pipe components (1, 2) against the spacer pieces (95).

## Revendications

1. Elément articulé de liaison pour pièces tubulaires (1, 2), notamment des pièces tubulaires de conduits d'échappement des moteurs à combustion interne de véhicules automobiles, comprenant au moins un élément de conduit flexible (4), au moins directement relié de manière étanche aux pièces tubulaires (1, 2), ainsi qu'au moins un élément d'appui (9, 10, 40, 41, 42, 50, 51, 60, 71, 82, 87, 88) qui est disposé à l'extérieur de l'élément de conduit, est au moins en liaison directe avec les pièces tubulaires, et dont au moins une région extrême est en liaison de support réciproque, et de guidage à mobilité angulaire relative, avec la pièce tubulaire voisine de cette dernière, par l'intermédiaire d'au moins un rembourrage d'appui (13, 70, 80, 81) à propriétés d'élasticité amortie, ainsi que d'une partie de montage (14, 15, 63) recevant ledit rembourrage, le rembourrage d'appui étant appliqué de part et d'autre, dans les directions axiale et éventuellement périphérique, contre l'élément d'appui et/ou la partie de montage (14, 15, 63),
caractérisé par le fait
que l'élément d'appui est formé par au moins deux parties d'appui (9, 10, 40, 41, 42, 50, 51, 60, 71, 82, 87, 88) qui coiffent l'élément de conduit (4) pour l'essentiel parallèlement à l'axe, et sont respectivement en butée par leurs extrémités, radialement vis-à-vis de l'axe (11) de l'élément de liaison, contre le rembourrage d'appui (13, 70, 80, 81) ou contre la pièce tubulaire (1, 2) associée ; et par le fait que l'élément de liaison présente au moins un moyen de serrage (22, 43, 64, 65, 74, 96) ceinturant extérieurement les parties d'appui (9, 10, 40, 41, 42, 50, 51, 60, 71, 82, 87, 88) et assurant leur cohésion, dans le sens radial, l'une en direction de l'autre.

2. Elément de liaison selon la revendication 1,
caractérisé par le fait
que les parties d'appui (9, 10, 40, 41, 42, 50, 51, 60, 71, 82, 87, 88) sont disposées avec répartition uniforme sur le pourtour dudit élément de liaison.

3. Elément de liaison selon la revendication 1 ou 2,
caractérisé par le fait
que les parties d'appui (9, 10, 40, 41, 42, 50, 51, 60, 71, 82, 87, 88) sont réalisées en tant que pièces structurelles en forme de coquilles, bombées autour de l'axe (11) dudit élément de liaison.

4. Elément de liaison selon l'une des revendications 1 à 3,
caractérisé par le fait
que le rembourrage d'appui (13, 70, 80, 81) et, avec ce dernier, les parties d'appui (9, 10, 40, 41, 42, 50, 51, 60, 71, 82, 87, 88), sont disposés au moins sur l'axe de mouvement principal de l'élément de liaison, ou à proximité dudit axe.

5. Elément de liaison selon l'une des revendications 1 à 4,
caractérisé par le fait
que l'élément d'appui comporte deux parties d'appui (9, 10, 41, 42, 60), lesdites parties d'appui étant en prise avec le rembourrage d'appui (13, 70, 80, 81) par l'une de leurs régions extrêmes, et leurs autres extrémités étant reliées, d'un seul tenant, à un organe tubulaire (12, 62) pouvant être mis en place, dans cette zone, sur la pièce tubulaire (1) associée et pouvant être arrêté, sur cette dernière, éventuellement en association avec l'extrémité correspondante de l'élément de conduit (4).

6. Elément de liaison selon l'une des revendications 1 à 5,
caractérisé par le fait
que l'élément d'appui est fabriqué à partir d'une ébauche prédécoupée en tôle (26) configurée en une bande, par emboutissage profond et perforation au centre de l'organe tubulaire (12, 62), et par formage et cintrage consécutifs des parties d'appui (9, 10, 41, 42, 60), à partir des régions (29, 30) de ladite ébauche prédécoupée en tôle (26) attenantes de part et d'autre audit organe tubulaire, jusqu'à une position pour l'essentiel parallèle à l'axe dudit organe tubulaire (12, 62).

7. Elément de liaison selon l'une des revendications 1 à 6,
caractérisé par le fait
que, dans le cas d'un élément d'appui muni de parties d'appui (40, 50, 51, 71, 82, 87, 88) en prise, par les deux régions extrêmes, avec au moins un rembourrage d'appui (13, 70, 80, 81), lesdites parties d'appui (40, 41, 42, 50, 51, 71, 82, 87, 88) sont réalisées, dans la région longitudinale située entre les régions extrêmes, sous la forme de pièces structurelles mutuellement en butée dans la direction périphérique dudit élément de liaison.

8. Elément de liaison selon la revendication 7,
caractérisé par le fait
que les arêtes (44, 45, 52, 53) de venue en butée mutuelle des parties d'appui (40, 41, 42, 50, 51, 71, 82, 87, 88) sont réalisées avec étendue parallèle à l'axe (11) dudit élément de liaison.

9. Elément de liaison selon la revendication 7 ou 8,
caractérisé par le fait
que les parties d'appui (40, 41, 42, 50, 51, 71, 82, 87, 88) sont en liaison mutuelle par concordance de formes, dans la région des arêtes (44, 45, 52, 53) de venue en butée, de manière à interdire un décalage radial.

10. Elément de liaison selon la revendication 9,
caractérisé par le fait
que la solidarisation par concordance de formes est établie par des pattes (46, 47, 54, 55) façonnées d'une seule pièce sur les parties d'appui (40, 41, 42, 50, 51, 71, 82, 87, 88), s'étendant dans la direction périphérique et emprisonnant, par-derrière, la partie d'appui respectivement voisine.

11. Elément de liaison selon l'une des revendications 1 à 10,
caractérisé par le fait
que la partie de montage (15, 63) est réalisée en tant que pièce structurelle entourant annulairement l'axe (11) dudit élément de liaison et reliée, de manière étanche, à l'extrémité associée de l'élément de conduit (4).

12. Elément de liaison selon la revendication 11,
caractérisé par le fait
que la partie de montage (15, 63) est mise en place sur une région extrême cylindrique de l'élément de conduit (4).

13. Elément de liaison selon l'une des revendications 1 à 12,
caractérisé par le fait
que le rembourrage d'appui est réalisé sous la forme d'un anneau d'appui entourant l'axe (11) dudit élément de liaison.

14. Elément de liaison selon l'une des revendications 1 à 12,
caractérisé par le fait
que le rembourrage d'appui (13, 80, 81) est réalisé sous la forme d'un anneau d'appui entourant un axe (3) perpendiculaire à l'axe (11) dudit élément de liaison.

15. Elément de liaison selon la revendication 14,
caractérisé par le fait
que l'orifice central de l'anneau d'appui (13, 80, 81) repose, par concordance de formes, sur un bombement extérieur (14, 61, 85) orienté radialement par rapport à l'axe (11) dudit élément de liaison et situé sur la région extrême associée de la partie d'appui (60, 82) et/ou de la partie de montage (15) ; et par le fait que l'anneau d'appui (13, 80, 81) prend radialement appui à l'extérieur, dans la direction axiale dudit élément de liaison, par l'intermédiaire de coudes et/ou de bombements extérieurs de la partie d'appui (9, 10, 40, 41, 42, 50, 51, 60, 71, 82, 87, 88) et/ou de la partie de montage (15, 63).

16. Elément de liaison selon la revendication 14 ou 15,
caractérisé par le fait
que l'anneau d'appui est réalisé sous la forme d'un ressort hélicoïdal (80, 81).

17. Elément de liaison selon l'une des revendications 1 à 12,
caractérisé par le fait
que le rembourrage d'appui (70) est réalisé sous la forme d'un segment annulaire centré par rapport à l'axe (11) dudit élément de liaison.

18. Elément de liaison selon la revendication 17,
caractérisé par le fait
que le segment annulaire (70) est arrêté, dans le sens périphérique, par des coudes (66) et/ou des bombements extérieurs de la partie d'appui et/ou de la partie de montage (63) qui sont en prise, par concordance de formes, avec les extrémités dudit segment orientées dans la direction périphérique.

19. Elément de liaison selon la revendication 17 ou 18,
caractérisé par le fait
que, en présence de deux segments annulaires (70) axialement juxtaposés, formant le rembourrage d'appui, un bombement extérieur concentrique (61, 72) orienté radialement, situé sur la région extrême associée de la partie d'appui (60, 71) et/ou de la partie de montage, est en prise par concordance de formes entre lesdits segments annulaires.

20. Elément de liaison selon l'une des revendications 1 à 19,
caractérisé par le fait
que le moyen de serrage (22, 43, 64, 65, 73, 74, 96) est une bague dont le matériau offre une section transversale rectangulaire, ronde, ovale ou polygonale.

21. Elément de liaison selon la revendication 20,
caractérisé par le fait
que la bague présente au moins une zone de séparation dont l'assemblage peut être assuré par des moyens de fermeture.

22. Elément de liaison selon la revendication 21,
caractérisé par le fait
que les moyens de fermeture sont formés par au moins un organe de solidarisation venant en prise avec les deux extrémités de la bague qui matérialisent la zone de séparation.

23. Elément de liaison selon la revendication 22,
caractérisé par le fait
que l'organe de solidarisation est une vis de serrage.

24. Elément de liaison selon la revendication 20,
caractérisé par le fait
que la bague (22, 43, 64, 65, 73, 74, 96) est fermée circonférentiellement, et sa section transversale intérieure est dimensionnée de façon telle qu'elle repose sur les parties d'appui (9, 10, 40, 41, 42, 50, 51, 60, 71, 82, 87, 88) avec précontrainte des rembourrages d'appui (13, 70, 80, 81) pouvant être prédéterminée dans le sens radial et, éventuellement, dans le sens axial.

25. Elément de liaison selon la revendication 24,
caractérisé par le fait
que la bague (22, 43, 64, 65, 73, 74, 96) est mise en place sur les parties d'appui (9, 10, 40, 41, 42, 50, 51, 60, 71, 82, 87, 88) par surcompression radiale exercée, sur les rembourrages d'appui (13, 70, 80, 81), par lesdites parties d'appui.

26. Elément de liaison selon l'une des revendications 1 à 25,
caractérisé par le fait
qu'un coulissement axial de la bague (64) est interdit par pénétration dans un renfoncement radial des parties d'appui (60, 71), concentrique à l'axe (11) dudit élément de liaison.

27. Elément de liaison selon l'une des revendications 1 à 26,
caractérisé par le fait
que les parties d'appui (87, 88) sont de réalisation scindée pour l'essentiel dans la région du centre de leur étendue longitudinale parallèle à l'axe (11) dudit élément de liaison, en formant deux tronçons (89, 90, 91, 92) de parties d'appui ; et par le fait que lesdits tronçons (89, 90, 91, 92) de parties d'appui sont reliés l'un à l'autre par un élément intercalaire (93, 94) en un matériau élastique thermiquement stable.

28. Elément de liaison selon la revendication 27,
caractérisé par le fait
que le matériau élastique thermiquement stable est un élastomère.

29. Elément de liaison selon la revendication 27 ou 28,
caractérisé par le fait
que les tronçons (89, 90, 91, 92) de parties d'appui se recouvrent partiellement dans la direction axiale ; et par le fait que l'élément intercalaire (93, 94) est réalisé sous la forme d'un coussin solidarisant lesdits tronçons (89, 90, 91, 92) de parties d'appui dans la zone de recouvrement.

30. Elément de liaison selon l'une des revendications 27 à 29,
caractérisé par le fait
que l'élément intercalaire (93, 94) est relié aux tronçons de parties d'appui par collage, par vulcanisation ou par des procédés d'assemblage similaires.

31. Elément de liaison selon l'une des revendications 1 à 30,
caractérisé par le fait
qu'un coussin amortisseur (84), consigné à demeure dans les directions axiale, radiale et périphérique, est interposé entre les parties d'appui (9, 10, 40, 41, 42, 50, 51, 60, 71, 82, 87, 88) et la région centrale flexible de l'élément de conduit (4).

32. Elément de liaison selon la revendication 31,
caractérisé par le fait
que le coussin amortisseur (84) est une pièce venue de compression à partir d'un tressage, d'un maillage ou d'un tricotage en fil métallique.

33. Elément de liaison selon l'une des revendications 1 à 32,
caractérisé par le fait
que, en présence de conduits parcourus par des circulations multiples, des pièces tubulaires (1, 2) voisines sont mutuellement en appui par l'intermédiaire d'organes d'espacement (95) ; les parties d'appui sont prévues sur des faces externes de l'ensemble de conduits qui sont, pour l'essentiel, tournées les unes vers les autres ; et les moyens de serrage (96) sont prévus de manière à emprisonner extérieurement l'ensemble de conduits et les parties d'appui (40), et à presser les pièces tubulaires (1, 2) contre les organes d'espacement (95).
